# EUROPEAN PATENT SPECIFICATION

(11) **EP 3 705 814 B1**
(45) Date of publication and mention of the grant of the patent: **18.12.2024**
(21) Application number: 18872916.4
(22) Date of filing: 30.10.2018
(51) Int. Cl.: F25B 39/02, H01M 10/6556, F28F 9/02

(54) **HEAT EXCHANGE ASSEMBLY, BATTERY ASSEMBLY AND BATTERY HEAT EXCHANGE SYSTEM**
WÄRMETAUSCHERANORDNUNG, BATTERIEANORDNUNG UND BATTERIEWÄRMEAUSTAUSCHSYSTEM
ENSEMBLE D'ÉCHANGE DE CHALEUR, ENSEMBLE BATTERIE ET SYSTÈME D'ÉCHANGE DE CHALEUR DE BATTERIE

(30) Priority: 30.10.2017 CN 201711032644; 30.10.2017 CN 201711041264; 30.10.2017 CN 201711042882
(43) Date of publication of application: 09.09.2020
(73) Proprietor: Zhejiang Sanhua Intelligent Controls Co., Ltd., Shaoxing, Zhejiang 312500 (CN)
(72) Inventor: ZHANG, Rongrong, Hangzhou Zhejiang 310018 (CN); ZHU, Zhenshan, Hangzhou Zhejiang 310018 (CN)
(74) Representative: Epping - Hermann - Fischer
(86) International application number: PCT/CN2018/112516
(87) International publication number: WO 2019/085868

(56) References cited:
- CN-A- 103 712 383
- CN-A- 104 214 996
- CN-A- 104 838 510
- CN-A- 105 143 807
- CN-A- 106 571 502
- US-A- 5 477 919
- US-A1- 2016 097 598

## Description

### FIELD

The present disclosure relates to the field of fluid heat exchange.

### BACKGROUND

Document CN 106571502 A discloses a heat exchanger, which belongs to the field of refrigeration and can be considered as the closest prior art. The heat exchanger includes a fluid separating channel, a fluid collecting channel, and micro channel flat pipes. The fluid separating channel and the fluid collecting channel are arranged on two ends of the micro channel flat pipes respectively. Side walls of the micro channel flat pipes are provided with heat-conducting plates which are tightly attached to the side walls of the micro channel flat pipes. One side of each of the heat-conducting plates attached to the micro channel flat pipes is provided with grooves matching the micro channel flat pipes. The other side of each of the heat-conducting plates is provided with convex structures. Fixing devices are arranged on an upper part of the heat-conducting plates, and the fixing devices can be bended. The heat exchanger is simple in structure, low in cost, and high in heat dissipation efficiency.

Document US 2016/0097598 A1 discloses a heat exchanger having a cover plate, a first manifold tube, a second manifold tube and at least one tube. The tube is received at the ends in a respective opening of the first manifold tube and of the second manifold tube. The cover plate is in contact with the manifold tubes and in thermal contact with the tube. A fixing device is provided by which the cover plate can be fixed to at least one manifold tube and/or to at least one tube.

The battery of an electric vehicle or a hybrid vehicle generates a large amount of heat during the working process of the vehicle, so that the temperature of the battery is increased, which affects the use of the battery and reduces the service life of the battery. Generally, the electric vehicle or the hybrid vehicle is provided with a system for battery cooling.

The battery cooling is generally achieved by a cooling liquid. In this case, the cooling liquid is required to be cooled down before the battery is cooled in the system. Thus, two heat exchanges of the cooling liquid are required, resulting in a low heat utilization rate.

### SUMMARY

An object of the present disclosure is to provide a heat exchange assembly, which has a simple and compact structure, can be used for battery cooling, and has a high heat utilization rate when used for the battery cooling.

In order to achieve the above object, the invention is set out in the appended set of claims.

### BRIEF DESCRIPTION OF THE DRAWINGS

Figure 1 is a schematic structural view showing a heat exchange assembly according to an embodiment of the present disclosure;
Figure 2 is a schematic structural view showing a first block portion shown in Figure 1;
Figure 3 is a schematic side view of the first block portion shown in Figure 2;
Figure 4 is a schematic sectional view taken along a line A-A shown in Figure 3;
Figure 5 is a schematic structural view showing the heat exchange assembly according to the embodiment shown in Figure 1 after the first block portion is removed;
Figure 6 is a schematic structural view showing a first fluid collecting sub-portion shown in Figure 1, where a, b, and c respectively show different structural views of the first fluid collecting sub-portion;
Figure 7 is a schematic structural view showing a second fluid collecting portion shown in Figure 1;
Figure 8 is a schematic view showing three implementations of a main body portion provided in the present disclosure, where a, b, and c each show one of the implementations;
Figure 9 is a schematic structural view showing a partition portion shown in Figure 1;
Figure 10 is a schematic structural view showing a heat exchange assembly according to another embodiment of the present disclosure;
Figure 11 is a schematic structural view showing a first block portion shown in Figure 10;
Figure 12 is a schematic front view of the first block portion shown in Figure 11;
Figure 13 is a schematic sectional view taken along a line C-C shown in Figure 12;
Figure 14 is a schematic top view of the first block portion shown in Figure 11;
Figure 15 is a schematic sectional view taken along a line D-D shown in Figure 14;
Figure 16 is a schematic structural view showing a heat exchange assembly according to another embodiment of the present disclosure;
Figure 17 is a schematic structural view showing a first block portion shown in Figure 16;
Figure 18 is a schematic front view of the first block portion shown in Figure 17;
Figure 19 is a schematic sectional view taken along a line E-E shown in Figure 18;
Figure 20 is a schematic structural view showing a heat exchange assembly according to another embodiment of the present disclosure;
Figure 21 is a schematic structural view showing a first block portion shown in Figure 20;
Figure 22 is a schematic right view of the first block portion shown in Figure 21;
Figure 23 is a schematic sectional view taken along a line F-F shown in Figure 22;
Figure 24 is a schematic left view of the first block portion shown in Figure 21;
Figure 25 is a schematic sectional view taken along a line G-G shown in Figure 24;
Figure 26 is a schematic structural view showing a first fluid collecting sub-portion shown in Figure 20;
Figure 27 is a schematic structural view showing a heat exchange assembly according to another embodiment of the present disclosure;
Figure 28 is a schematic structural view showing a heat exchange assembly according to another embodiment of the present disclosure;
Figure 29 is a schematic structural view showing a first block portion shown in Figure 27 and Figure 28;
Figure 30 is a schematic right view of the first block portion shown in Figure 29;
Figure 31 is a schematic sectional view taken along a line H-H shown in Figure 30;
Figure 32 is a schematic structural view showing a second block portion shown in Figure 27 and Figure 28;
Figure 33 is a schematic right view of the second block portion shown in Figure 32;
Figure 34 is a schematic sectional view taken along a line I-I shown in Figure 33;
Figure 35 is a schematic structural view showing a heat exchange assembly according to another embodiment of the present disclosure;
Figure 36 is a schematic structural view showing another implementation of the heat exchange assembly according to the embodiment shown in Figure 35;
Figure 37 is a schematic structural view showing a heat exchange assembly according to another embodiment of the present disclosure;
Figure 38 is a schematic structural view showing another implementation of the heat exchange assembly according to the embodiment of Figure 37;
Figure 39 is a schematic structural view showing a heat exchange assembly according to another embodiment of the present disclosure;
Figure 40 is a schematic structural view showing another implementation of the heat exchange assembly according to the embodiment shown in Figure 39;
Figure 41 is a schematic structural view showing another implementation of the heat exchange assembly according to the embodiment shown in Figure 1;
Figure 42 is a schematic structural view showing another implementation of the heat exchange assembly according to the embodiment shown in Figure 10;
Figure 43 is a schematic structural view showing another implementation of the heat exchange assembly according to the embodiment shown in Figure 16;
Figure 44 is a schematic structural view showing another implementation of the heat exchange assembly according to another embodiment shown in Figure 20;
Figure 45 is a schematic structural view showing another implementation of the heat exchange assembly according to the embodiment shown in Figure 27;
Figure 46 is a schematic structural view showing another implementation of the heat exchange assembly according to the embodiment shown in Figure 28;
Figure 47 is a schematic structural view showing a battery assembly according to another embodiment of the present disclosure;
Figure 48 is a schematic structural view showing a battery assembly according to another embodiment of the present disclosure;
Figure 49 is a schematic sectional view of a first block portion shown in Figure 40;
Figure 50 is a schematic structural view showing a battery assembly according to an embodiment of the present disclosure;
Figure 51 is a schematic structural view showing a battery assembly according to another embodiment of the present disclosure;
Figure 52 is a schematic structural view showing a battery assembly according to another embodiment of the present disclosure;
Figure 53 is a schematic structural view showing a battery assembly according to another embodiment of the present disclosure;
Figure 54 is a schematic structural view showing a battery assembly according to another embodiment of the present disclosure;
Figure 55 is a schematic structural view showing a battery assembly according to another embodiment of the present disclosure;
Figure 56 is a schematic structural view showing an implementation of an expansion portion provided in the present disclosure;
Figure 57 is a schematic view of a battery heat exchange system according to an embodiment of the present disclosure; and
Figure 58 is a schematic block diagram showing a control process of the battery assembly according to the embodiments of the present disclosure.

### DETAILED DESCRIPTION

A heat exchange assembly is provided in the present disclosure. The heat exchange assembly may be used for cooling and heating of a vehicle battery. In a case that a fluid flowing inside the heat exchange assembly is a refrigerant, the heat exchange assembly may be used for the cooling and heating of the battery. The throttled and depressurized refrigerant flows in a main body portion of the heat exchange assembly, so that heat of an external structure (for example, a battery) in contact with the main body portion of the heat exchange assembly can be absorbed, thereby reducing the temperature of the external structure (for example, the battery). In addition, the heat exchange assembly may be used as a condenser to heat the external structure (for example, the battery). It should be understood that a flow described below is especially referred to as a mass flow.

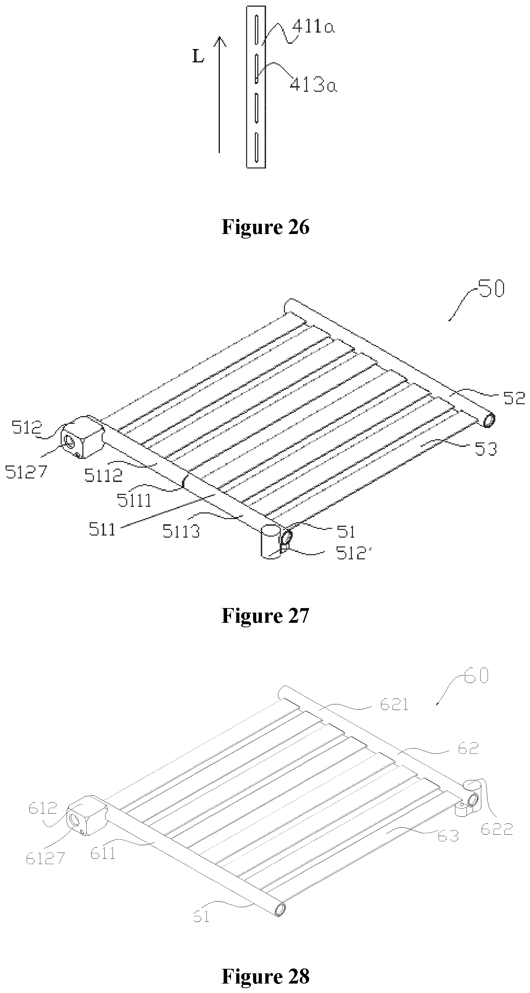

The following embodiments in Figures 27-40, 45 and 46 are not according to the invention as set out in the appended set of claims but are present for illustration purposes and helpful understanding.

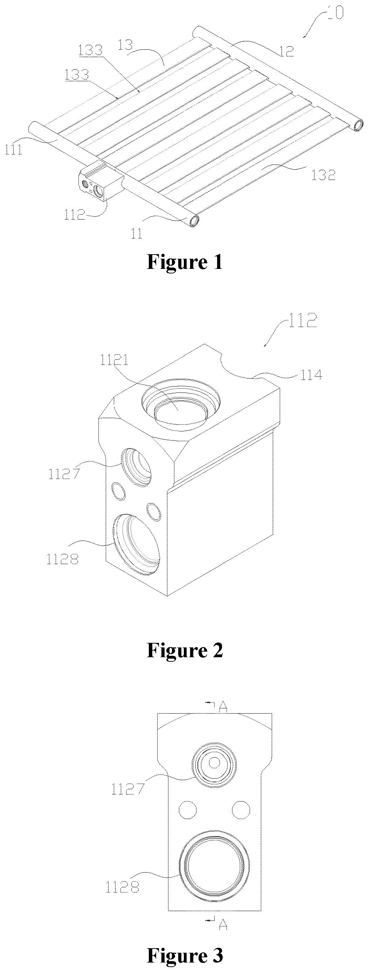

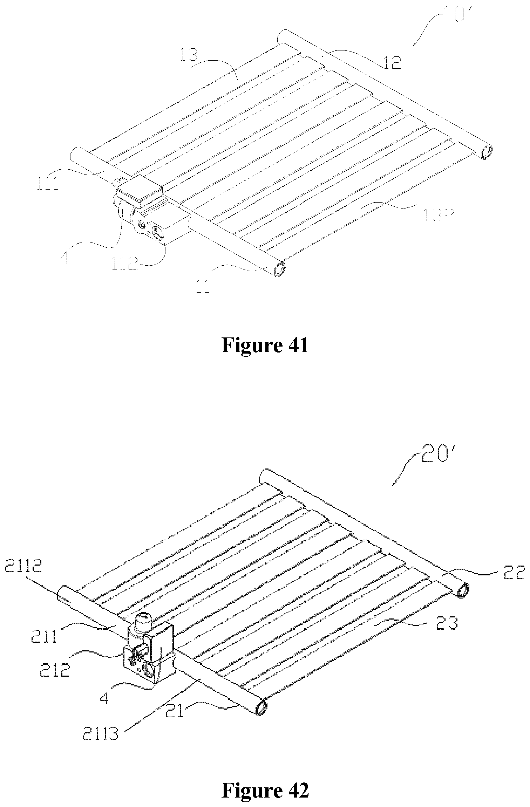

In an embodiment, reference is made to Figures 1 and 41. Figure 1 illustrates a structure of a heat exchange assembly 10, and Figure 41 illustrates a structure of a heat exchange assembly 10'. The heat exchange assembly 10 and the heat exchange assembly 10' each include a first fluid collecting portion 11, two or more main body portions 13, and a second fluid collecting portion 12. The first fluid collecting portion 11 and the second fluid collecting portion 12 are respectively arranged at two sides of the main body portion 13. The main body portion 13 connects the first fluid collecting portion 11 and the second fluid collecting portion 12. The main body portion 13 is provided with two or more fluid passages 131. A passage equivalent diameter of each of the fluid passages ranges from 10µm to 1000µm, which helps to distribute the fluid from the first fluid collecting portion/the second fluid collecting portion into the fluid passage, and further evenly distribute the fluid between the main body portions, thereby effectively absorbing the heat of an external part or transferring the heat to the external part when the main body portions are in contact with the external part.

It should be noted that the term "contact" herein includes not only a case that two elements are directly contacted with each other, but also a case that the two elements are contacted with each other via another element, i.e., a case that the two elements are indirectly contacted with each other. The term "main body portion" includes a structure having a shape such as a flat plate shape or an arc plate shape, and the first fluid collecting portion and the second fluid collecting portion each include a structure having a shape such as a linear shape, a right angle cross shape, or an arc shape, which is not limited to the structures illustrated in the drawings.

The first fluid collecting portion 11 at least includes a first block portion 112 and a first fluid collecting sub-portion 111. The first block portion 112 and the first fluid collecting sub-portion 111 are fixed to each other. The first fluid collecting portion 11 and the second fluid collecting portion 12 each are provided with a cavity. The first fluid collecting portion 11 and the second fluid collecting portion 12 each include a tubular structure, a block structure or other structures having a cavity. The first block portion 112 may generally have a block structure, or a column structure, or other structures. The main body portion is flat-shaped, which indicates that a surface of the main body portion 13 has a large flat plate-shaped or arc-shaped structure, but not excluding a structure which is not flat plate-shaped.

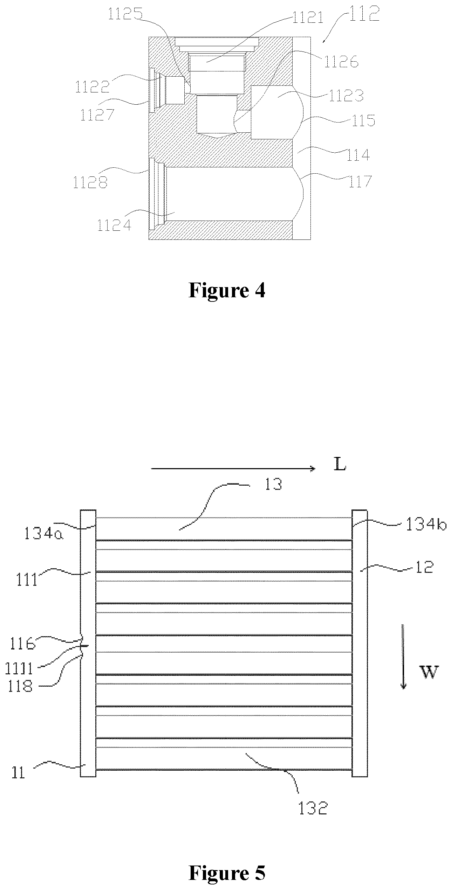

As an implementation, referring to Figures 1 and 5, each of the two or more main body portions 13 includes a lateral portion 132 and a side face portion 133. The lateral portion 132 is adjacent to the side face portion 133. An area of the side face portion 133 is less than an area of the lateral portion 132. Side face portions 133 of adjacent main body portions are arranged opposite to each other. In this case, a width direction of each main body portion is approximately parallel to a length direction of the first fluid collecting portion 11. In this specification, the length direction of the first fluid collecting portion 11 refers to an extension direction of the first fluid collecting portion 11, that is, a direction extending from one end of the first fluid collecting portion 11 to the other end of the first fluid collecting portion 11. In a case that the first fluid collecting portion 11 has a linear structure, the length direction is a linear direction. In a case that the first fluid collecting portion 11 has a curved structure, the length direction is a curved direction. For example, in a case that the first fluid collecting portion 11 is circular, the length direction of the first fluid collecting portion is an extending direction of the first fluid collecting portion 11 from one end to the other end, which is also approximately circular. A direction that the heat exchange assembly faces towards the fluid passage is defined as an inward direction. The fluid passage is provided inside the lateral portion 132. When the fluid flows through the fluid passage, the fluid may transfer the heat to the external part through the lateral portion 132 or absorb the heat of the external part, which facilitates the heat exchange of the external part in contact with the lateral portion.

The passage equivalent diameter of the main body portion 13 ranges from 100µm to 10000µm. A length of the main body portion 13 is much greater than a height of the main body portion. A width of the main body portion is much greater than the height of the main body portion. The fluid passages are arranged in a length direction L of the main body portion. In this specification, the length direction L of the main body portion is a direction extending from the first fluid collecting portion 11 to the second fluid collecting portion 12 shown in Figure 5, the width direction W of the main body portion is a direction extending from one end of the first fluid collecting portion/the second fluid collecting portion to the other end thereof shown in Figure 5, and the height direction H of the main body portion is a vertical direction of the structure shown in Figure 1. The statement "much greater than" means that greater than at least three times. The main body portions 13 are arranged approximately parallel to each other, and the main body portions 13 are spaced apart from each other.

The main body portion 13 includes a first end portion 134a and a second end portion 134b. The first end portion 134a and the second end portion 134b are respectively located at two ends of the main body portion 13. The first end portion 134a and the second end portion 134b may extend into the cavities of the first fluid collecting portion 11 and the second fluid collecting portion 12 in an insertion manner. The main body portion 13 is fixed to wall portions of the first fluid collecting portion and the second fluid collecting portion by fitting. For example, a fitting position between the main body portion 13 and the fluid collecting portion is fixed by welding or in other manners. Alternatively, the first end portion 134a and the second end portion 134b are respectively fixed to the wall portions forming the cavities of the corresponding fluid collecting portions, for example, by welding or in other manners. The term "end portion" herein refers to a portion located at a certain distance from a port.

The first fluid collecting portion 11 is provided with multiple first grooves 113a. The first grooves 113a are respectively fitted to first end portions 134a of the main body portions. The first grooves 113a each extend towards the length direction of the first fluid collecting portion 11. The first grooves 113a are arranged in a straight line and are spaced apart from each other. The second fluid collecting portion 12 is provided with multiple second grooves 113b. The second grooves 113b are respectively fitted to second end portions 134b of the main body portions. The second grooves 113b each extend towards the length direction of the second fluid collecting portion 12. The second grooves 113b are arranged in a straight line and are spaced apart from each other. A part of the main body portion 13 is inserted into the first groove 113a, and a part of the main body portion 13 is inserted into the second groove 113b. The grooves are provided on the periphery of the first fluid collecting portion 11 and the second fluid collecting portion 12. In this way, the main body portions respectively fitted to the grooves are arranged in a straight line, and the lateral portions are on the same plane, which facilitates subsequent bonding with other parts (such as batteries) and the heat exchange. The extension direction of the first groove 131a or the second groove 131b herein refers to a length direction of the groove. In a case that the lateral portion is arc-shaped, the first grooves are spaced apart from each other and are arranged in an arc shape, and the second grooves are spaced apart from each other and are arranged in an arc shape.

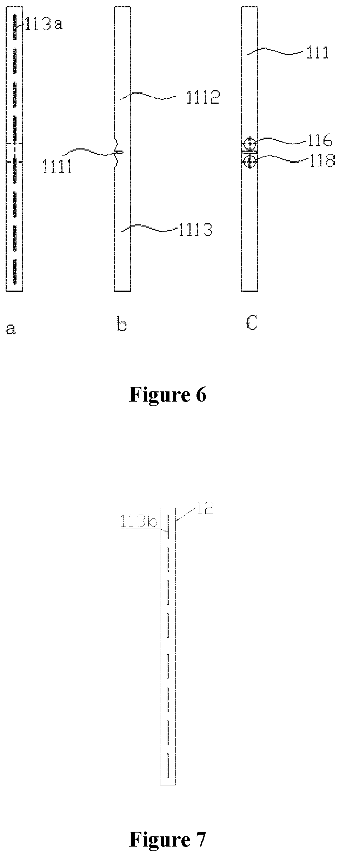

Specifically, referring to Figures 6 and 7, a side portion of the first fluid collecting sub-portion 111 is provided with multiple first grooves 113a. The first grooves 113a are arranged in a straight line, where the side portion indicates a peripheral position of the first fluid collecting sub-portion 111. The first end portion 134a is fixed to a wall portion forming the first groove 113a of the first fluid collecting sub-portion 111 by fitting. The second end portion 134b is fixed to a wall portion forming the second groove 113b of the second fluid collecting portion 12.

The width of the main body portion may range, for example, from 2cm to 8cm, which facilitates the flatness of the main body portion and has a simple manufacturing process. The width of the main body portion refers to a length of a short side of the main body portion, that is, a length in the direction W shown in Figure 5.

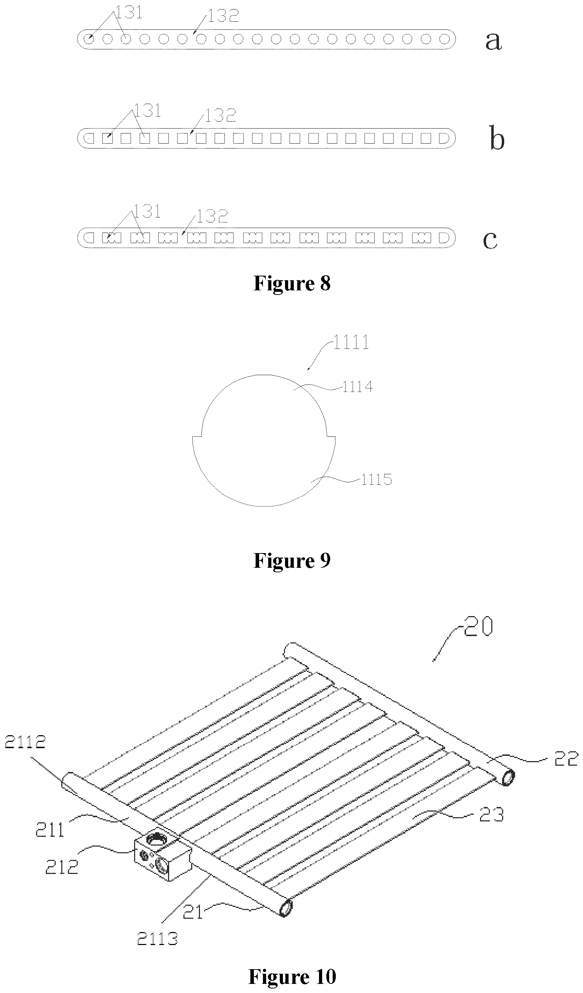

Referring to Figure 8, the main body portion 13 may be implemented in various manners. As an implementation, the fluid passages 131 inside the main body portion 13 may be all circular passages that are uniformly distributed. As another implementation, except the passages at two ends, the fluid passages 131 inside the main body portion 13 may be are all rectangular or square passages. As another implementation, except the passages at two ends, the fluid passages 131 inside the main body portion 13 may be irregular passages having the same shape. In addition to the above implementations, the fluid passages may have other regular or irregular shapes. The fluid passages inside the same main body portion have approximately the same shape. In addition, the fluid passages may be uniformly or non-uniformly distributed, which may be determined according to heat exchange requirements.

Referring to Figures 2 to 6, the first fluid collecting portion 11 includes the first block portion 112 and the first fluid collecting sub-portion 111. The first block portion 112 and the first fluid collecting sub-portion 111 are fixed to each other by assembling, for example, by welding. The first block portion 112 includes a first bonding portion 114. The first bonding portion 114 is fixed to the first fluid collecting sub-portion 111. The first bonding portion 114 is provided with a first connection aperture 115. The first connection aperture 115 is in communication with an inner cavity of the first fluid collecting sub-portion 111. The first fluid collecting sub-portion 111 includes a second connection aperture 116. The second connection aperture 116 is in communication with the first connection aperture 115. The first bonding portion 114 is provided with a fifth connection aperture 117. The first fluid collecting sub-portion 111 is provided with a sixth connection aperture 118. The fifth connection aperture 117 is in communication with the sixth connection aperture 118. In this way, the fluid can enter the first fluid collecting sub-portion 111 from the first block portion 112.

The first block portion 112 includes a mounting bore passage 1121, a first connection passage 1122, a second connection passage 1123, and a communication passage 1124. The first connection passage 1122 is in communication with the mounting bore passage 1121. The second connection passage 1123 is in communication with the mounting bore passage 1121. The mounting bore passage 1121 extends into the first block portion 112 from an end portion of the first block portion 112. A port communicating the mounting bore passage 1121 and the first connection passage 1122 is defined as a first port 1125, and a port communicating the mounting bore passage 1121 and the second connection passage 1123 is defined as a second port 1126. Taking an axially-extend direction of the mounting bore passage 1121 as a height direction, the first port 1125 and the second port 1126 are at different heights. The communication passage 1124 is in communication with the fifth connection aperture 117. The communication passage 1124 is not in communication with the first connection passage 1122 inside the first block portion 112. The communication passage 1124 is not in communication with the second connection passage 1123 inside the first block portion 112. The communication passage 1124 is not in communication with the mounting bore passage 1121 inside the first block portion 112. The first connection passage 1122 and the second connection passage 1123 are located on different sides of the mounting bore passage 1121, including the case of being located on opposite sides, and the case of being angled with respect to each other.

Referring to Figure 6, the first fluid collecting sub-portion 111 includes a partition portion 1111, a first cavity 1112, and a second cavity 1113. The partition portion 1111 is used for partitioning the first cavity 1112 and the second cavity 1113. The first cavity 1112 is in communication with the second connection aperture 116. The second cavity 1113 is in communication with the sixth connection aperture 118. The second connection passage 1122 is in communication with the first cavity 1112. The communication passage 1124 is in communication with the second cavity 1113. The second connection aperture 116 and the sixth connection aperture 118 are respectively located on two sides of the partition portion 1111. As a specific implementation, a structure of the partition portion 1111 is shown in Figure 9. The partition portion 1111 includes a body portion 1114 and an extension portion 1115. A shape of the body portion 1114 is adapted to a sectional shape of the inner cavity of the first fluid collecting sub-portion 111. The extension portion 1115 extends outwards from the periphery of the body portion 1114. In Figure 9, a part on the periphery of the body portion 1114 extends outwards to form an approximately arc-shaped extension portion 1115, and the extension portion 1115 is fixed to a wall portion forming the inner cavity of the first fluid collecting sub-portion 111 by welding.

The number of the fluid passages in communication with the first cavity 1112 is approximately equal to the number of the fluid passages in communication with the second cavity 1113. In this way, flows of the fluid entering the second cavity 1113 from the first cavity 1112 via the main body portions 13 are approximately the same as each other. It should be understood that the term "approximately the same" means that the flow is in the range of ±5%. As shown in the figure, the port 1127 of the first connection passage 1122 and the port 1128 of the communication passage 1124 are located on the same side of the first block portion 112, the port 1127 of the first connection passage 1122 and the first bonding portion 114 are located on opposite sides of the first block portion 112, and the port 1128 of the communication passage 1124 and the first bonding portion 114 are located on opposite sides of the first block portion 112, which facilitates the connection and mounting between the first block portion 112 and an external connection pipe, thereby facilitating the subsequent assembling. The heat exchange assembly includes a first interface and a second interface. In this embodiment, the first interface is the port 1127 of the first connection passage 1122, and the second interface is the port 1128 of the communication passage 1124.

Referring to Figures 2 to 4, an extension direction of the mounting bore passage 1121 is approximately parallel to an extension direction of the first fluid collecting sub-portion 111, and extension directions of the second connection passage 1123 and the communication passage 1124 each are approximately perpendicular to the extension direction of the first fluid collecting sub-portion 111. The first block portion 112 is located at an approximately middle position of the first fluid collecting sub-portion 111. The second connection passage 1123 and the communication passage 1124 are located on two sides of the partition portion 1111. It should be understood that the middle position herein is not limited to the middle part in a strict sense, and the term "approximately middle position" means a middle structure position except the end portion, which is also explained below in the same manner.

The fluid flowing in the fluid passage is a refrigerant. According to different working conditions of the refrigerant, the heat of the external part is absorbed, or the heat is released to the external part.

Referring to Figure 41, the heat exchange assembly 10' includes an expansion portion 4. The expansion portion 4 may be used for the throttling and depressurizing of a fluid such as a refrigerant.

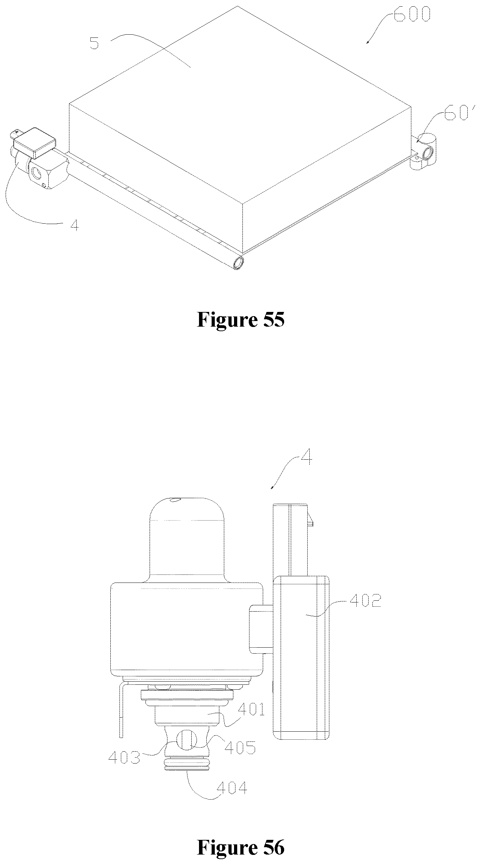

Referring to Figure 56, the expansion portion 4 includes a core portion 401 and a coil portion 402. The coil portion 402 and the core portion 401 are fixed to each other by assembling. At least a part of the expansion portion 4 is fixed to a wall portion forming the mounting bore passage 1121 of the first block portion 112 by assembling, for example, with a screw thread or other parts such as a clip, a screw nut and an elastic piece. The core portion 401 includes a valve port 403 and an orifice 404. The valve port 403 of the core portion 401 is in communication with the first connection passage. The orifice 404 is in communication with the second connection passage. The core portion 401 includes a valve needle 405. The valve needle 405 may be affected by the magnetic force such as a coil. Most of the valve needle 405 is located above the orifice 404. The valve needle 405 is driven by other structure of the core portion 401 to move up and down, so that the valve needle 405 is movable in an axial direction of the core portion relative to a wall portion of the core portion forming the orifice. The valve needle 405 is capable of being spaced from the wall portion forming the orifice 404 of the core portion 401, or the valve needle 405 extends into the orifice 404 and blocks the communication between the second connection passage and the valve port of the core portion 401.The orifice 404 herein refers to a hole provided on the core portion 401, and is not limited to a flow passage formed after the valve needle and the orifice are fitted to each other.

In the above-mentioned embodiment, the movement of the valve needle is driven by the expansion portion 4 through electrically acting on the coil portion, by which high control accuracy can be obtained. In addition, a low superheat degree control or even a zero superheat degree control can be achieved with the expansion portion 4. In this way, the temperature of the whole heat exchange assembly is uniform, ensuring that the temperature of each part of a component (such as the battery) assembled with the heat exchange assembly is in a target temperature range and a temperature difference between components (such as batteries) is not large, thereby improving the efficiency and the service life of the components (such as the batteries). Further, by the low superheat degree control or even the zero superheat degree control, the heat exchange of the heat exchange assembly is sufficient, thereby improving the COP of a system to which the heat exchange assembly is applied.

The expansion portion 4 and the first fluid collecting portion 11 are connected with each other by a block body rather than a pipeline. In this way, a change in a flow state of a gas-liquid two-phase refrigerant, for example, gas-liquid layering can avoided, which affects the cooling effect. In addition, the heat exchange assembly has a compact structure, is easily mounted and has good anti-vibration performance, so that the number of mounting steps is reduced correspondingly.

After the expansion portion 4 is located in the mounting bore passage 1121, the refrigerant enters the second connection passage 1123 from the first interface (the port 1127) via the first connection passage 1122 and the orifice. Then, the refrigerant enters the first cavity of the first fluid collecting sub-portion 111 from the first connection aperture 115. The refrigerant enters the second fluid collecting portion 12 through the fluid passages inside the main body portions 13 in communication with the first fluid collecting sub-portion 111. The refrigerant is collected in the second fluid collecting portion 12 and enters the second cavity of the first fluid collecting sub-portion 111 through the fluid passages inside the main body portions in communication with the second fluid collecting portion 12. Then, the refrigerant enters the communication passage 1124 via the fifth connection aperture 117, and then flows away from the second interface (the port 1128).

After the refrigerant is throttled and expanded by the expansion portion 4, the refrigerant absorbs the heat of the external part (for example, a battery) on the main body portion 13 in the fluid passages of the main body portion 13, to reduce the temperature of the external part (for example, the battery) on the main body portion.

In the case that a refrigerant is used for the cooling in the system, an expansion valve is required in the system, and a pipeline is generally required to connect the expansion valve in the system, which results in the complicated structure. In addition, the phase state or the working state of the refrigerant may change after passing through the expansion valve, and the flow state of the gas-liquid two-phase refrigerant in the pipeline may change, for example, the gas-liquid layering, which affects the heat exchange effect to a certain extent. In the heat exchange assembly 10' according to the above embodiment, the change of the phase state or the working state caused by the expansion and throttling of the refrigerant and the fluid heat exchange are performed in the heat exchange assembly 10', which reduces the impact of the change in the phase state of the refrigerant. If the gas-liquid layering is severe, a part of the refrigerant entering the main body portion may be in the gas phase, and another part of the refrigerant entering the main body portion may be in the liquid phase, so that the heat exchange capacity of the area with too much gas phase refrigerant is different from the heat exchange capacity of the area with too much liquid phase refrigerant, resulting in uneven heat exchange of the main body portion with the external part.

In another embodiment, reference is made to Figures 10 to 15, and Figure 42. Figure 10 illustrates a structure of a heat exchange assembly 20, and Figure 42 illustrates a structure of a heat exchange assembly 20'. The heat exchange assembly 20 and the heat exchange assembly 20' each include a first fluid collecting portion 21, main body portions 23, and a second fluid collecting portion 23. The first fluid collecting portion 21 includes a first block portion 212 and a first fluid collecting sub-portion 211. A structure of the first fluid collecting sub-portion 211 may refer to the structure of the first fluid collecting sub-portion 111 in the above embodiment.

The first block portion 212 and the first fluid collecting sub-portion 211 are fixed to each other by assembling. The first block portion 212 includes a first bonding portion 214. The first bonding portion 214 is fixed to the first fluid collecting sub-portion 211. The first bonding portion 214 is provided with a first connection aperture 215. The first connection aperture 215 is in communication with an inner cavity of the first fluid collecting sub-portion 211. The first fluid collecting sub-portion 211 includes a second connection aperture 216. The second connection aperture 216 is in communication with the first connection aperture 215. The first bonding portion 214 is provided with a fifth connection aperture 217. The first fluid collecting sub-portion 211 is provided with a sixth connection aperture 218. The fifth connection aperture 217 is in communication with the sixth connection aperture 218. The first fluid collecting sub-portion includes the sixth connection aperture. An equivalent diameter of the fifth connection aperture is greater than or equal to an equivalent diameter of the sixth connection aperture. An equivalent diameter of the first connection aperture is greater than or equal to an equivalent diameter of the second connection aperture. The fifth connection aperture and the sixth connection aperture at least partially overlap with each other. In this way, the fluid enters the second connection aperture from the first connection aperture, and the fluid enters the sixth connection aperture from the fifth connection aperture, so that the flow resistance is relatively small, and the influence on the fluid performance is small.

The first block portion 212 includes a mounting bore passage 2121, a first connection passage 2122, a second connection passage 2123, and a communication passage 2124. The first connection passage 2122 is in communication with the mounting bore passage 2121. The second connection passage 2123 is in communication with the mounting bore passage 2121. The mounting bore passage 2121 extends into the first block portion 212 from an end portion of the first block portion 212. A port communicating the mounting bore passage 2121 and the first connection passage 2122 is defined as a first port 2125, and a port communicating the mounting bore passage 2121 and the second connection passage 2123 is defined as a second port 2126. Taking an axially-extend direction of the mounting bore passage 2121 as a height direction, the first port 2125 and the second port 2126 are at different heights. The communication passage 2124 is in communication with the fifth connection aperture 217. The communication passage 2124 is not in communication with the first connection passage 2122 inside the first block portion 212. The communication passage 2124 is not in communication with the second connection passage 2123 inside the first block portion 212. The communication passage 2124 is not in communication with the mounting bore passage 2121 inside the first block portion 212. The first connection passage 2122 and the second connection passage 2123 are located on different sides of the mounting bore passage 2121.

An extension direction of the mounting bore passage 2121 is approximately perpendicular to an extension direction of the first fluid collecting sub-portion 211, and extension directions of the second connection passage 2123 and the communicating passage 2124 each are approximately perpendicular to the extension direction of the first fluid collecting sub-portion 211. The first block portion 212 is located at an approximately middle position of the first fluid collecting sub-portion 211. The second connection passage 2123 and the communication passage 2124 are located on two sides of a partition portion.

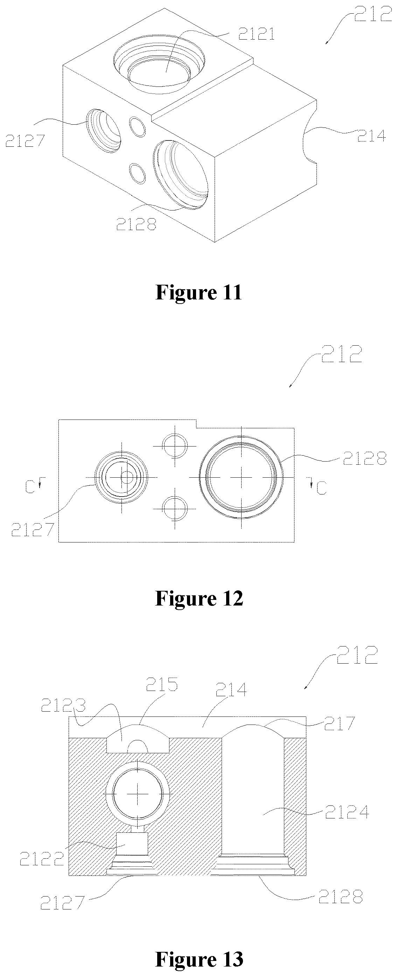

The number of the fluid passages in communication with the first cavity 2112 is approximately equal to the number of the fluid passages in communication with the second cavity 2113. In this way, flows of the fluid entering into the second cavity from the first cavity via the main body portions 23 are approximately the same as each other. It should be understood that the term "approximately the same" means that the flow is in the range of ±5%. As shown in Figure 13, the port 2127 of the first connection passage 2122 and the port 2128 of the communication passage 2124 are located on the same side of the first block portion 212, and the port 2127 of the first connection passage 2122 and the first bonding portion 214 are located on opposite sides of the first block portion 212, and the port 2128 of the communication passage 2124 and the first bonding portion 214 are located on opposite sides of the first block portion 212, which facilitates the connection and mounting between the first block portion 212 and an external connection pipe, thereby facilitating the subsequent assembling.

The heat exchange assembly 20 and the heat exchange assembly 20' each include a first interface and a second interface. The first interface is the port 2127 of the first connection passage 2122, and the second interface is the port 2128 of the communication passage 2124.

Referring to Figure 42, the heat exchange assembly 20' includes an expansion portion 4. The expansion portion 4 may be used for the throttling and depressurizing of a fluid such as a refrigerant. A structure of the expansion portion 4 may refer to that in the above embodiment. In this embodiment, the expansion portion 4 is mounted approximately perpendicular to the main body portion, and the fluid enters from the side portion, so that the mounting of the expansion portion 4 is more convenient, not affecting the mounting of the external structure of the first interface and the second interface.

After the expansion portion 4 is located in the mounting bore passage 2121, the refrigerant enters the second connection passage 2123 from the first interface via the first connection passage 2122 and the orifice. Then, the refrigerant enters the first cavity of the first fluid collecting sub-portion 211 from the first connection aperture 215. The refrigerant enters the second fluid collecting portion 22 through the fluid passages inside the main body portions in communication with the first fluid collecting sub-portion. The refrigerant is collected in the second fluid collecting portion 22 and enters the second cavity 2113 of the first fluid collecting sub-portion 211 through the fluid passages inside the main body portions in communication with the second fluid collecting portion 22. Then, the refrigerant enters the communication passage 2124 via the fifth connection aperture 217, and then flows away from the second interface.

After the refrigerant is throttled and expanded by the expansion portion 4, the refrigerant absorbs the heat of the external part (for example, a battery) on the main body portion in the fluid passages of the main body portion, to reduce the temperature of the external part (for example, the battery) on the main body portion.

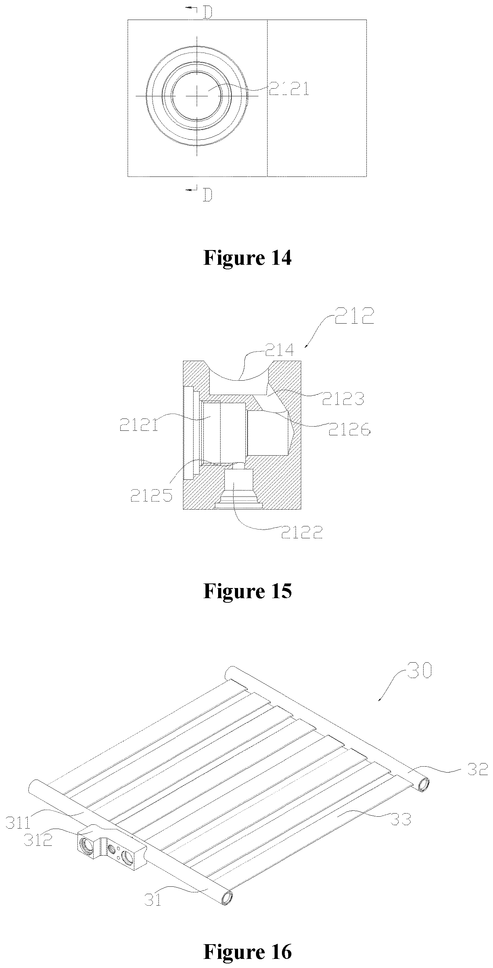

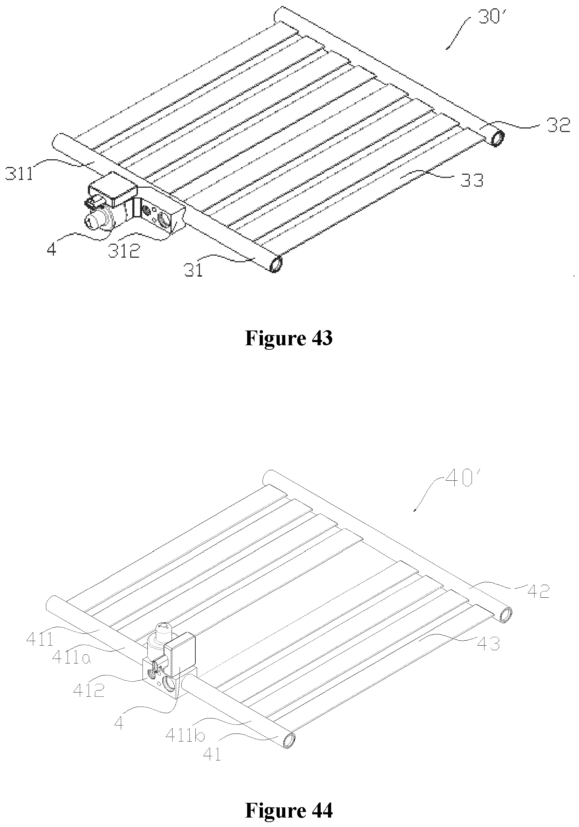

In another embodiment, reference is made to Figures 16 to 19, and Figure 43. Figure 16 illustrates a structure of a heat exchange assembly 30, and Figure 43 illustrates a structure of a heat exchange assembly 30'. The heat exchange assembly 30 and the heat exchange assembly 30' each include a first fluid collecting portion 31, main body portions 33, and a second fluid collecting portion 32. The first fluid collecting portion 31 includes a first block portion 312 and a first fluid collecting sub-portion 311. A structure of the first fluid collecting sub-portion 311 may refer to the structure of the first fluid collecting sub-portion 111 in the above embodiment.

The first block portion 312 and the first fluid collecting sub-portion 311 are fixed to each other by assembling. The first block portion 312 includes a first bonding portion 314. The first bonding portion 314 is fixed to the first fluid collecting sub-portion 311. The first bonding portion 314 is provided with a first connection aperture 315. The first connection aperture 315 is in communication with an inner cavity of the first fluid collecting sub-portion 311. The first fluid collecting sub-portion 311 includes a second connection aperture (which is not labeled in the figure, and the structure thereof refers to that in the above embodiments). The second connection aperture is in communication with the first connection aperture 315. The first bonding portion 314 is provided with a fifth connection aperture 317. The first fluid collecting sub-portion 311 is provided with a sixth connection aperture (which is not labeled in the figure, and the structure thereof refers to that in the above embodiments). The fifth connection aperture 317 is in communication with the sixth connection aperture.

The first block portion 312 includes a mounting bore passage 3121, a first connection passage 3122, a second connection passage 3123, and a communication passage 3124. The first connection passage 3122 is in communication with the mounting bore passage 3121. The second connection passage 3123 is in communication with the mounting bore passage 3121. The mounting bore passage 3121 extends into the first block portion 312 from an end portion of the first block portion 312. A port communicating the mounting bore passage 3121 and the first connection passage 3122 is defined as a first port 3125, and a port communicating the mounting bore passage 3121 and the second connection passage 3123 is defined as a second port 3126. Taking an axially-extend direction of the mounting bore passage 3121 as a height direction H, the first port 3125 and the second port 3126 are at different heights. The communication passage 3124 is in communication with the fifth connection aperture 317. The communication passage 3124 is not in communication with the first connection passage 3122 inside the first block portion. The communication passage 3124 is not in communication with the second connection passage 3123 inside the first block portion 312. The communication passage 3124 is not in communication with and the mounting bore passage 3121 inside the first block portion 312.

A port 3129 of the mounting bore passage 3121, a port 3127 of the first connection passage 3122, and a port 3128 of the communication passage 3124 are located on the same side of the first block portion 312. The port 3127 of the first connection passage 3122 and the first bonding portion 314 are located on opposite sides of the first block portion 312, and the port 3128 of the communication passage 3124 and the first bonding portion 314 are located on opposite sides of the first block portion 312. In this way, the first connection passage and the communication passage are easily connected with an external pipeline, facilitating the subsequent assembling. An extension direction of the mounting bore passage 3121 is approximately perpendicular to an extension direction of the first fluid collecting sub-portion 311, and extension directions of the second connection passage 3123 and the communicating passage 3124 each are approximately perpendicular to the extension direction of the first fluid collecting sub-portion 311. The first block portion 312 is located at an approximately middle position of the first fluid collecting sub-portion 311. The second connection passage 3123 and the communication passage 3124 are located on two sides of a partition portion.

The first connection passage 3122 is in the form of a bent passage. The first connection passage 3122 includes a first sub-passage 3122a and a second sub-passage 3122b. The first sub-passage 3122a extends into the first block portion 312 from a port thereof. The second sub-passage 3122b extends to the mounting bore passage 3121 from the first sub-passage 3122a. The second sub-passage 3122b is an inclined passage. In the height direction H in which the mounting bore passage 3121 axially extends 3121, the port 3125 communicating the second sub-passage 3122b and the mounting bore passage 3121 is relatively higher than the port 3126 communicating the second connection passage 3123 and the mounting bore passage 3121. In this way, in the process of manufacturing the first block portion 312, the second sub-passage 3122b is easily manufactured. In addition, due to the setting of the inclined passage, the influence on the flow resistance of the fluid is small, so that the performance of the fluid entering the fluid passages of the main body portions 33 is relatively stable and controllable, and thus the heat exchange performance of the heat exchange assembly is controllable and stable.

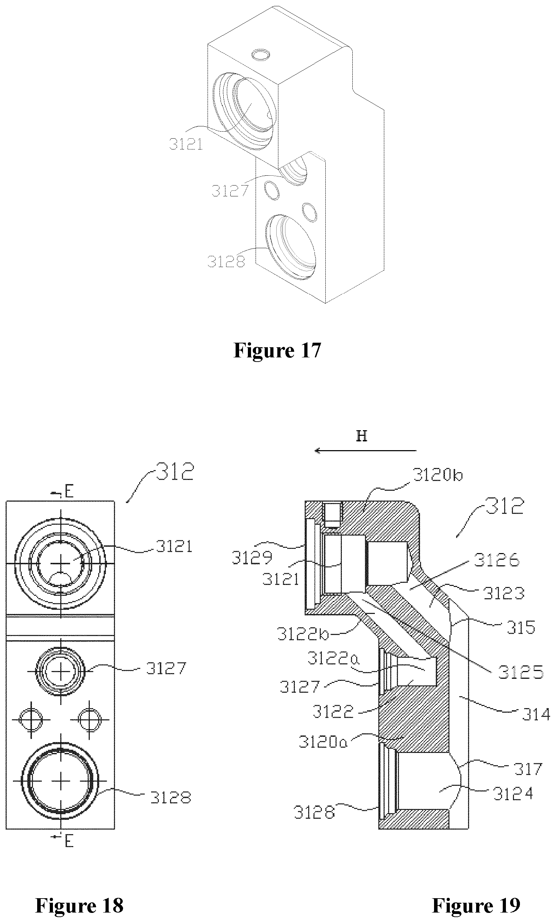

The first block portion 312 includes a convex portion 3120b and a flat portion 3120a. The flat portion 3120a is provided with the first bonding portion 314, and the flat portion 3120a is fixed to the first fluid collecting sub-portion 311. The convex portion 3120b protrudes outwardly with respect to the flat portion 3120a. The convex portion 3120b is provided with the mounting bore passage 3121. The flat portion 3120a is provided with the first connection passage 3122, the second connection passage 3123, and the communication passage 3124. A position where the convex portion 3120b is provided with the port of the mounting bore passage 3121 is defined as an upper portion, and the position of the convex portion 3120b opposite to the port of the mounting bore passage 3121 is defined as a lower portion (a right portion in Figure 19). A space is left between the lower portion of the convex portion 3120b and the first fluid collecting sub-portion 311, so as to prevent weak welding between the flat portion 3120a and the first fluid collecting sub-portion 311 due to a manufacturing error between the convex portion 3120b and the first fluid collecting sub-portion 311, which may result in the leakage. By providing the convex portion 3120b, the extension direction of the mounting bore passage 3121 is approximately parallel to the extension direction of the communication passage 3124, and the port of the mounting bore passage 3121 and the port of the communication passage 3124 are located on the same side of the first block portion 312, thereby facilitating the subsequent mounting.

The heat exchange assembly 30 and the heat exchange assembly 30' each include a first interface and a second interface. The first interface is the port 3127 of the first connection passage 3122, and the second interface is the port 3128 of the communication passage 3124.

Referring to Figure 43, the heat exchange assembly 30' includes an expansion portion 4. The expansion portion 4 may be used for the throttling and depressurizing of a fluid such as a refrigerant. A structure of the expansion portion 4 may refer to that in the above embodiments.

After the expansion portion 4 is located in the mounting bore passage 3121, the refrigerant enters the second connection passage 3123 from the first interface via the first connection passage 3122 and the orifice. Then, the refrigerant enters the first cavity of the first fluid collecting sub-portion 311 from the first connection aperture 315. The refrigerant enters the second fluid collecting portion 32 through the fluid passages in the main body portions in communication with the first fluid collecting sub-portion. The refrigerant is collected in the second fluid collecting portion 32 and enters the second cavity of the first fluid collecting sub-portion 311 through the fluid passages in the main body portions in communication with the second fluid collecting portion 32. Then, the refrigerant enters the communication passage 3124 via the fifth connection aperture 317, and then flows away from the second interface.

After the refrigerant is throttled and expanded by the expansion portion 4, the refrigerant absorbs the heat of the external part (for example, a battery) on the main body portion in the fluid passages of the main body portion, to reduce the temperature of the external part (for example, the battery) on the main body portion.

In each of the above embodiments, the first fluid collecting sub-portion and the second fluid collecting portion each are in a tube structure, and the main body portion, the first fluid collecting sub-portion and the second fluid collecting portion are made of an aluminum alloy material having large stiffness and hardness, which is not only suitable for fluids with ordinary pressure, but also for high pressure fluids such as R744 and CO₂. In addition, by using the aluminum alloy material, the cost is low, and the whole heat exchange assembly is light. The following embodiments are also applicable.

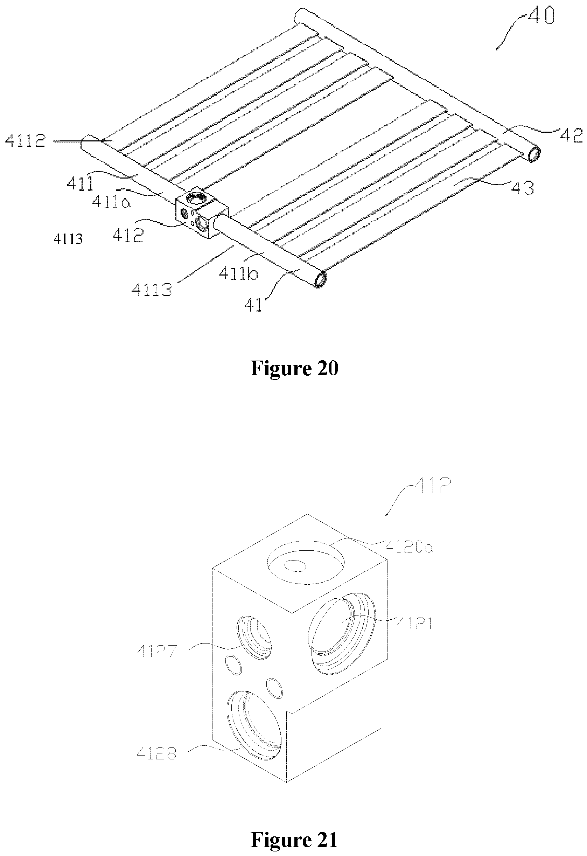

In another embodiment, reference is made to Figures 20 to 26, and Figure 44. Figure 20 illustrates a structure of a heat exchange assembly 40, and Figure 44 illustrates a structure of a heat exchange assembly 40'. The heat exchange assembly 40 and the heat exchange assembly 40' each include a first fluid collecting portion 41, main body portions 43, and a second fluid collecting portion 42. The first fluid collecting portion 41 includes a first fluid collecting sub-portion 411a, a second fluid collecting sub-portion 411b, and a first block portion 412. The first fluid collecting sub-portion 411a and the second fluid collecting sub-portion 411b are located at two ends of the first block portion 412. The first block portion 412 connects the first fluid collecting sub-portion 411a and the second fluid collecting sub-portion 411b. The first fluid collecting sub-portion 411a and the first block portion 412 are fixed to each other, for example, by welding. The second fluid collecting sub-portion 411b and the first block portion 412 are fixed to each other, for example, by welding.

The first block portion 412 includes a mounting bore passage 4121, a first connection passage 4122, a second connection passage 4123, a communication passage 4124, a first connection aperture 4120a, and a third connection aperture 4120b. The first connection passage 4122 is in communication with the mounting bore passage 4121. The second connection passage 4123 is in communication with the mounting bore passage 4121. The first connection aperture 4120a is in communication with the second connection passage 4123, and the first connection aperture 4120a is in communication with an inner cavity of the first fluid collecting sub-portion 411a. The third connection aperture 4120b is in communication with an inner cavity of the second fluid collecting sub-portion 411b. A port communicating the first connection passage 4122 and the mounting bore passage 4121 is defined as a first port 4125, and a port communicating the second connection passage 4123 and the mounting bore passage 4121 is defined as a second port 4126. Taking an axially-extend direction of the mounting bore passage 4121 as a height direction H, the first port 4125 and the second port 4126 are at different heights. The second connection passage 4123 is an inclined passage, that is, a connection position between the second connection passage 4123 and the mounting bore passage 4121 and a connection position between the second connection passage 4123 and the first connection aperture 4120a are at different heights in the extension direction of the mounting bore passage. Due to the setting of the inclined passage, the second connection passage is easily manufactured in the process of manufacturing the first block portion.

One end of the first fluid collecting sub-portion 411a extends into the first connection aperture 4120a. One end of the second fluid collecting sub-portion 411b extends into the third connection aperture 4120b. An end portion of the first fluid collecting sub-portion is fixed to a wall portion forming the first connection aperture of the first block portion by welding. An end portion of the second fluid collecting sub-portion is fixed to a wall portion forming the third connection aperture of the first block portion by welding. Specifically, one end of the first fluid collecting sub-portion 411a is opened, and the other end of the first fluid collecting sub-portion 411a is sealed. The open end of the first fluid collecting sub-portion 411a is fixed to the wall portion forming the first connection aperture 4120a of the first block portion 412 by welding. One end of the second fluid collecting sub-portion 411b is opened, and the other end of the second fluid collecting sub-portion 411b is sealed. The open end of the second fluid collecting portion 411b is fixed to the wall portion forming the third connection aperture 4120b of the first block portion 412 by welding. Structures of the first fluid collecting sub-portion 411a and the second fluid collecting sub-portion 411b may generally refer to the structure of the first fluid collecting sub-portion 111, but not limited thereto. Compared with the first fluid collecting sub-portion 111, one port of the first fluid collecting sub-portion 411a may extend into the first block portion without being sealed. Therefore, the manufacturing process of the first fluid collecting sub-portion 411a is simpler than that of the first fluid collecting sub-portion 111.

The first fluid collecting sub-portion is connected to one side of the first block portion. The second fluid collecting sub-portion is connected to the other side of the first block portion. The first fluid collecting sub-portion and the first block portion are fixed to each other by welding. The second fluid collecting sub-portion and the first block portion are fixed to each other by welding. In the assembling process of the heat exchange assembly, one end (the open end) of the first fluid collecting sub-portion is inserted into the first connection aperture, one end (the open end) of the second fluid collecting sub-portion is inserted into the third connection aperture, and the main body portion is inserted into the first fluid collecting sub-portion and the second fluid collecting sub-portion. The above process may be achieved by furnace welding once. The welding process is relatively simple and easy to operate. In a case that a depth to which the first fluid collecting sub-portion extends is not less than 5mm and a depth to which the second fluid collecting sub-portion extends is not less than 5mm, the welding quality of the first fluid collecting sub-portion, the second fluid collecting sub-portion and the first block portion is better, facilitating the structure stability.

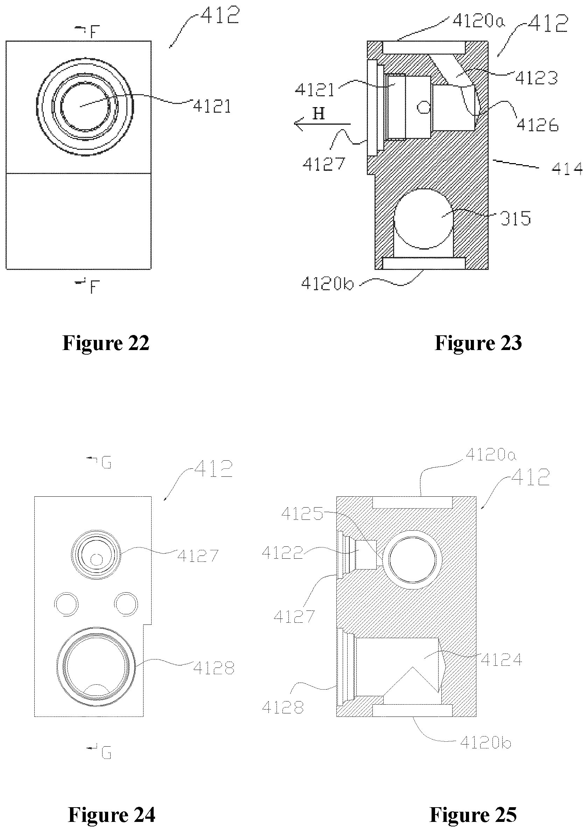

As shown in Figure 23, the first connection aperture 4120a and the third connection aperture 4120b are located on two sides of the first block portion 412. In this way, the first fluid collecting sub-portion 411a and the second fluid collecting sub-portion 411b may be located at two ends of the first block portion 412. The main body portions connected with the first fluid collecting sub-portion may be approximately parallel to the main body portions connected with the second fluid collecting sub-portion, and a similar battery structure may be located on the two parts of the main body portions. A length direction of the first fluid collecting portion 41 is taken as a length direction of the first block portion 412. A length of the first block portion 41 is at least 50mm, facilitating the fixing of the first fluid collecting sub-portion 411a and the second fluid collecting sub-portion 411b by welding.

As another implementation, the third connection aperture 4120b may be located on the top of the first block portion, where the top may be a position on a side of the port where the first mounting bore passage 4121 is provided. The second fluid collecting portion may include two or more fluid collecting sub-portions. For example, the second fluid collecting sub-portion is set at 90° to the first fluid collecting sub-portion, and the second fluid collecting portion is formed by two sections that are set at 90° to each other. In this case, for example, the battery is placed on the main body portions connected with the first fluid collecting sub-portion, and the side of the battery may also be in contact with the main body portion connected with the second fluid collecting sub-portion, facilitating the heat exchange of the battery.

Referring to Figure 26 and in conjunction with Figures 6 and 7, a side portion of the first fluid collecting sub-portion 411a is provided with first grooves 413a , a side portion of the second fluid collecting sub-portion 411b is provided with first grooves, and a side portion of the second fluid collecting portion 412 is provided with second grooves, where the side portion refers to a peripheral position of the first fluid collecting sub-portion, the second fluid collecting sub-portion, or the second fluid collecting portion. Structures of the first groove and the second groove may refer to the structures of the first groove 113a and the second groove 113b. The first grooves 413a of the first fluid collecting sub-portion 411a each extend towards a length direction L of the first fluid collecting sub-portion 411a. The first grooves of the second fluid collecting sub-portion 411b each extend towards a length direction of the second fluid collecting sub-portion 412. The first grooves 413a of the first fluid collecting sub-portion 411a are arranged in a straight line and are spaced apart from each other. The first grooves of the second fluid collecting sub-portion 411b are arranged in a straight line and are spaced apart from each other. The second grooves of the second fluid collecting portion 42 each extend towards the length direction of the second fluid collecting portion 42. The second grooves of the second fluid collecting portion 42 are arranged in a straight line and are spaced apart from each other.

The heat exchange assembly includes two or more main body portions 43. The main body portion 43 is provided with fluid passages. The main body portion includes a first end portion and a second end portion (structures of the first end portion and the second end portion may refer to the structures of the first end portion 134a and the second end portion 134b in above embodiment). The first end portion is fixed to a wall portion forming the first groove of the first fluid collecting sub-portion or a wall portion forming the first groove of the second fluid collecting sub-portion by fitting. The second end portion is fixed to a wall portion forming the second groove of the second fluid collecting portion by fitting. The main body portions are arranged approximately parallel to each other and are spaced apart from each other. The width of the main body portion ranges from 2cm to 8cm, facilitating the contact between the external part and the main body portion and the manufacturing process.

The number of the main body portions connected with the first fluid collecting sub-portion 411a is equal to the number of the main body portions connected with the second fluid collecting sub-portion 411b. The main body portions are arranged parallel to each other. The lateral portions of the main body portions are approximately on the same plane. In this case, the fluid enters via a first interface, and the fluid is evenly distributed to the main body portions through a first cavity and is collected in the second fluid collecting portion. Then, the fluid is evenly distributed to the main body portions again and then flows away from a second cavity and a second interface. The flow of the fluid is relatively uniform, causing the heat exchange of the fluid to be uniform.

It should be understood that, the second fluid collecting portion 42 may be formed by a single one, or may be formed by assembling relatively short ones. The second fluid collecting portions in other embodiments may be formed in the same manner as the above.

As a specific implementation, an extension direction of the mounting bore passage 4121 is approximately perpendicular to extension directions of the first fluid collecting sub-portion 411a and the second fluid collecting sub-portion 411b. A port 4127 of the first connection passage 4122 and a port 4128 of the communication passage 4124 are located on the same side of the first block portion 412. The port 4127 of the first connection passage 4122 and the first bonding portion 414 are located on opposite sides of the first block portion 412. The port 4128 of the communication passage 4124 and the first bonding portion 414 are located on opposite sides of the first block portion 412. A port 4129 of the mounting bore passage 4121 is located above the first block portion 412. The extension direction of the mounting bore passage 4121 is approximately perpendicular to the main body portion 43. In this way, the connection between the first block portion and the external pipeline can be facilitated. In addition, the first fluid collecting sub-portion 411a and the second fluid collecting sub-portion 411b are located on two sides of the first block portion 412, reducing a length size of the first fluid collecting portion 411 and thus reducing the size of the whole heat exchange assembly. The heat exchange assemble 40 and the heat exchange assemble 40' each include a first interface and a second interface. The first interface is the port 4127 of the first connection passage 4122, and the second interface is the port 4128 of the communication passage 4124. The first interface is in communication with the first cavity 4112, and the second interface is in communication with the second cavity 4113.

The first interface and the second interface may be located on the same side of the first block portion, facilitating the connection with the external structure or the connection pipe. For the structure of the first block portion, the first connection passage 4122 and the communication passage 4124 are provided separately and are not in communication with each other, so that the first block portion 412 can be used for inflow and outflow of the fluid.

The first cavity 4112 is provided in the first fluid collecting sub-portion 411a, and the second cavity 4113 is provided in the second fluid collecting sub-portion 411b.

Referring to Figure 44, the heat exchange assembly 40' includes an expansion portion 4. The expansion portion 4 may be used for the throttling and depressurizing of a fluid such as a refrigerant. A structure of the expansion portion 4 may refer to that in the above embodiments. In this embodiment, the expansion portion 4 is mounted approximately perpendicular to the main body portion, and the fluid enters from the side portion, so that the mounting of the expansion portion 4 is more convenient, not affecting the mounting of the external structure of the first interface and the second interface.

After the expansion portion 4 is located in the mounting bore passage 4121, the refrigerant enters the second connection passage 4123 from the first interface via the first connection passage 4122 and the orifice. Then, the refrigerant enters the first cavity 4112 from the first connection aperture 4120a. The refrigerant enters the second fluid collecting portion 42 through the fluid passages in the main body portions in communication with the first fluid collecting sub-portion. The refrigerant is collected in the second fluid collecting portion 42 and enters the second cavity 4113 through the fluid passages in the main body portions in communication with the second fluid collecting portion 42. Then, the refrigerant enters the communication passage 4124 via the third connection aperture 4120b, and then flows away from the second interface.

After the refrigerant is throttled and expanded by the expansion portion 4, the refrigerant absorbs the heat of the external part (for example, a battery) on the main body portion in the fluid passages of the main body portion, to reduce the temperature of the external part (for example, the battery) on the main body portion.

A pressure of the refrigerant at the first connection aperture 4120a is approximately equal to a pressure of the refrigerant at the third connection aperture 4120b. Without considering the influence of a pressure drop, temperatures of the refrigerant at different parts of the main body portion are approximately equal to each other, which facilitates the heat exchange of the external part (such as a battery) in contact with the main body portion. In this embodiment, since the first fluid collecting sub-portion 411a and the second fluid collecting sub-portion 411b are welded to the first block portion 412, the welding process is more convenient and the manufacturing process is easier, compared with the case of the first bonding portion having an arc surface.

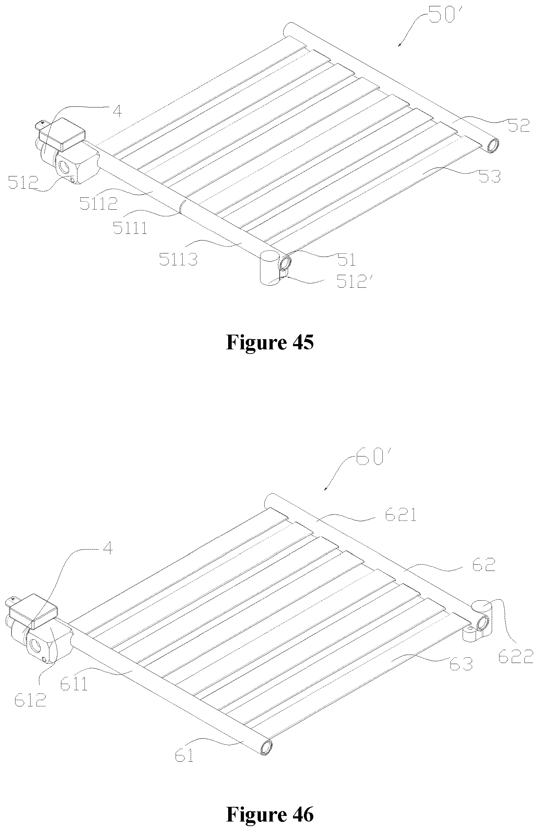

In another embodiment, reference is made to Figures 27 to 34, and Figure 45. Figure 27 illustrates a structure of a heat exchange assembly 50, and Figure 45 illustrates a structure of a heat exchange assembly 50'. The heat exchange assembly 50 and the heat exchange assembly 50' each include a first fluid collecting portion 51, main body portions 53, and a second fluid collecting portion 52. The first fluid collecting portion 51 includes a first block portion 512 and a first fluid collecting sub-portion 511. A connection relationship between the first fluid collecting sub-portion 511 and the main body portion may generally refer to that of the first fluid collecting sub-portion 111 in the above embodiment. The first block portion 512 and the first fluid collecting sub-portion 511 are fixed to each other by assembling. The first block portion 512 includes a first bonding portion 514. The first bonding portion 514 is fixed to the first fluid collecting sub-portion 511. The first bonding portion 514 is provided with a first connection aperture 515. The first connection aperture 515 is in communication with an inner cavity of the first fluid collecting sub-portion 511. The first fluid collecting sub-portion 511 includes a second connection aperture (which is not shown in the figure). The second connection aperture is in communication with the first connection aperture 515.

The first block portion 512 includes a mounting bore passage 5121, a first connection passage 5122, and a second connection passage 5123. The first connection passage 5122 is in communication with the mounting bore passage 5121. The second connection passage 5123 is in communication with the mounting bore passage 5121. The mounting bore passage 5121 extends into the first block portion 512 from an end portion of the first block portion 512. A port communicating the mounting bore passage 5121 and the first connection passage 5122 is defined as a first port 5125, and a port communicating the mounting bore passage 5121 and the second connection passage 5123 is defined as a second port 5126. Taking an axially-extend direction of the mounting bore passage 5121 as a height direction, the first port 5125 and the second port 5126 are at different heights. The first connection passage 5122 and the second connection passage 5123 are located on different sides of the mounting bore passage.

The first block portion 512 may be located on the upper side, the lower side, or the side portion of the first fluid collecting sub-portion 511. The first bonding portion 514 may be located on one of different sides of the first fluid collecting sub-portion, including the upper side, the lower side and the side portion of the first fluid collecting sub-portion. In a case that the first fluid collecting sub-portion 511 is a cylinder, the side portion is directed to the structure of the heat exchange assembly, and the directions of up and down are illustrated in Figure 27 as an example.

The first fluid collecting portion 51 further includes a second block portion 512'. The second block portion 512' and the first block portion 512 are located on two sides of the first fluid collecting sub-portion 511. The second block portion 512' includes a second bonding portion 514' and a communication passage 5124. The second bonding portion 514' is fixed to the first fluid collecting sub-portion 511, for example, by welding. The second bonding portion 514' is provided with a third connection aperture 5141. The first fluid collecting sub-portion 511 is provided with a fourth connection aperture (which is not shown in the figure). The third connection aperture 5141 is in communication with the fourth connection aperture. The communication passage 5124 is in communication with the third connection aperture 5141. The first fluid collecting sub-portion 511 further includes a partition portion 5111, a first cavity 5112, and a second cavity 5113. The partition portion 5111 is used to partition the first cavity 5112 and the second cavity 5113. A structure of the partition portion 5111 may refer to that of the partition portion 1111. The partition portion 5111 may also be implemented by other structure capable of partitioning the cavities. The first cavity 5112 is in communication with the second connection aperture. The second cavity 5113 is in communication with the fourth connection aperture. The number of the fluid passages in communication with the first cavity 5112 is approximately equal to the number of the fluid passages in communication with the second cavity 5112. In this way, flows of the fluid entering the second cavity 5113 from the first cavity 5112 via the main body portions 55 are approximately the same as each other. It should be understood that the term "approximately the same" means that the flow is in the range of ±5%.

The heat exchange assembly 50 and the heat exchange assembly 50' each include a first interface and a second interface. The first interface is a port 5127 of the first connection passage 5122, and the second interface is a port 5128 of the communication passage 5124.

Referring to Figure 45, the heat exchange assembly 50' includes an expansion portion 4. The expansion portion 4 may be used for the throttling and depressurizing of a fluid such as a refrigerant. A structure of the expansion portion 4 may refer to that in the above embodiment.

After the expansion portion 4 is located in the mounting bore passage 5121, the refrigerant enters the second connection passage 5123 from the first interface via the first connection passage 5122 and the orifice. Then, the refrigerant enters the first cavity 5112 of the first fluid collecting sub-portion 511 from the first connection aperture 515. The refrigerant enters the second fluid collecting portion 52 through the fluid passages inside the main body portions in communication with the first fluid collecting sub-portion. The refrigerant is collected in the second fluid collecting portion 52 and enters the second cavity 5113 of the first fluid collecting sub-portion 511 through the fluid passages inside the main body portions in communication with the second fluid collecting portion 52. Then, the refrigerant enters the communication passage 5124 via the third connection aperture 5124, and then flows away from the second interface.

After the refrigerant is throttled and expanded by the expansion portion 4, the refrigerant absorbs the heat of the external part (for example, a battery) on the main body portion in the fluid passages of the main body portion, to reduce the temperature of the external part (for example, the battery) on the main body portion.

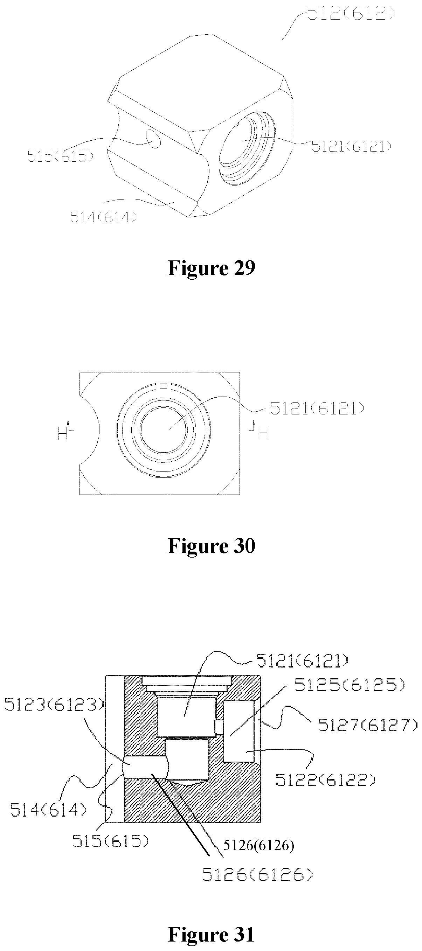

Figure 28 illustrates a structure of a heat exchange assembly 60, and Figure 46 illustrates a structure of a heat exchange assembly 60'. The heat exchange assembly 60 and the heat exchange assembly 60' each include a first fluid collecting portion 61, main body portions 63, and a second fluid collecting portion 62. The first fluid collecting portion 61 includes a first block portion 612 and a first fluid collecting sub-portion 611. A structure of the first fluid collecting sub-portion 611 may refer to that of the first fluid collecting sub-portion 111 in the above embodiment. A structure of the first block portion 612 is approximately the same as the structure of the first block portion 512. For the sake of greater clarity in the drawings, reference is also made to Figures 29 to 31, where the reference numerals in parentheses are reference numerals of corresponding components in the heat exchange assembly 60. The first block portion 612 and the first fluid collecting sub-portion 611 are fixed to each other by assembling. The first block portion 612 includes a first bonding portion 614. The first bonding portion 614 is fixed to the first fluid collecting sub-portion 611. The first bonding portion 614 is provided with a first connection aperture 615. The first connection aperture 615 is in communication with an inner cavity of the first fluid collecting sub-portion 611. The first fluid collecting sub-portion 611 includes a second connection aperture 616. The second connection aperture 616 is in communication with the first connection aperture 615.

The first block portion 612 includes a mounting bore passage 6121, a first connection passage 6122, and a second connection passage 6123. The first connection passage 6122 is in communication with the mounting bore passage 6121. The second connection passage 6123 is in communication with the mounting bore passage 6121. The mounting bore passage 6121 extends into the first block portion 612 from an end portion of the first block portion 612. A port communicating the mounting bore passage 6121 and the first connection passage 6122 is defined as a first port 6125, and a port communicating the mounting bore passage 6121 and the second connection passage 6123 is defined as a second port 6126. Taking an axially-extend direction of the mounting bore passage 6121 as a height direction, the first port 6125 and the second port 6126 are at different heights. The first connection passage 6122 and the second connection passage 6123 are located on different sides of the mounting bore passage.

The first block portion 612 may be located on the upper side, the lower side, or the side portion of the first fluid collecting sub-portion 611. The first bonding portion 614 may be located on one of different sides of the first fluid collecting sub-portion 611, including the upper side, the lower side and the side portion of the first fluid collecting sub-portion. In a case that the first fluid collecting sub-portion 611 is a cylinder, the side portion is directed to the structure of the heat exchange assembly, and the directions of up and down are illustrated in figure as an example.

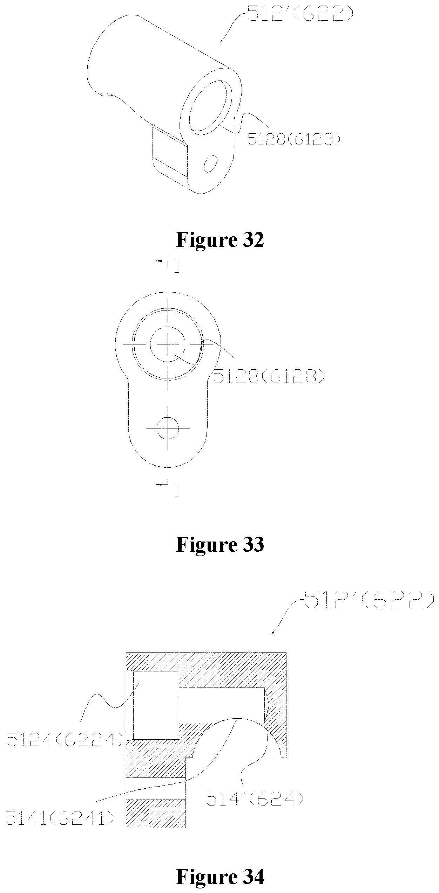

The second fluid collecting portion 62 includes a second fluid collecting sub-portion 621 and a second block portion 622. The second fluid collecting sub-portion 621 and the second block portion 622 are fixed to each other by assembling. A structure of the second block portion 622 is approximately the same as the structure of the second block portion 512'. For the sake of greater clarity in the drawings, reference is also made to Figures 32 to 34, where the reference numerals in parentheses are reference numerals of corresponding components in the heat exchange assembly 60 or the heat exchange assembly 60'. The second block portion 622 includes a second bonding portion 624 and a communication passage 6224. The second bonding portion 624 is fixed to the second fluid collecting sub-portion 621, for example, by welding. The second bonding portion 624 is provided with a third connection aperture 6241. The second fluid collecting sub-portion 621 is provided with a fourth connection aperture (which is not shown in the figure). The third connection aperture 6241 is in communication with the fourth connection aperture. The communication passage 6224 is in communication with the third connection aperture 6241. For the heat exchange assembly, the first block portion 612 and the second block portion 622 are located on different sides of the heat exchange assembly, so that the fluid can be distributed into the main body portions better.

The heat exchange assembly 60 and the heat exchange assembly 60' each include a first interface and a second interface. The first interface is a port 6127 of the first connection passage 6122, and the second interface is a port 6228 of the communication passage 6224.

Referring to Figure 46, the heat exchange assembly 60' includes an expansion portion 4. The expansion portion 4 may be used for the throttling and depressurizing of a fluid such as a refrigerant. A structure of the expansion portion 4 may refer to that in the above embodiment.

After the expansion portion 4 is located in the mounting bore passage 6121, the refrigerant enters the second connection passage 6123 from the first interface via the first connection passage 6122 and the orifice. Then, the refrigerant enters the cavity of the first fluid collecting sub-portion 611 from the first connection aperture 615. The refrigerant enters the second fluid collecting portion 62 through the fluid passages inside the main body portions in communication with the first fluid collecting sub-portion, and then flows away from the second interface.

After the refrigerant is throttled and expanded by the expansion portion 4, the refrigerant absorbs the heat of the external part (for example, a battery) on the main body portion in the fluid passages of the main body portion, to reduce the temperature of the external part (for example, the battery) on the main body portion.

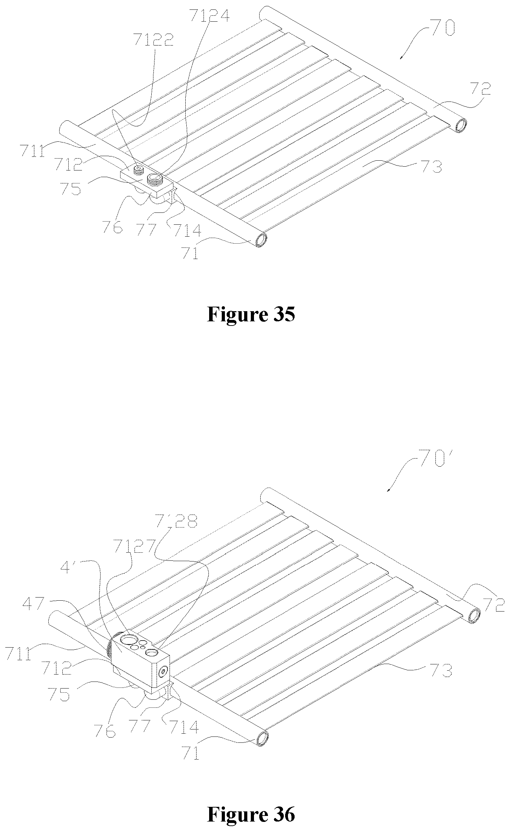

In another embodiment, reference is made to Figures 35 and 36. Figure 35 illustrates a structure of a heat exchange assembly 70, and Figure 36 illustrates a structure of a heat exchange assembly 70'. The heat exchange assembly 70 and the heat exchange assembly 70' each include a first fluid collecting portion 71, main body portions 73 and a second fluid collecting portion 72. The first fluid collecting portion 71 includes a first block portion 712 and a first fluid collecting sub-portion 711. A structure of the first fluid collecting sub-portion 711 may refer to the structure of the first fluid collecting sub-portion 111 in the above embodiment.

The first block portion 712 and the first fluid collecting sub-portion 711 are fixed to each other by assembling. The first block portion 712 includes a first bonding portion 714. The first bonding portion 714 is fixed to the first fluid collecting sub-portion 711. The first bonding portion 714 is provided with a first connection aperture (which is not shown). The first connection aperture is in communication with an inner cavity of the first fluid collecting sub-portion 711. The first fluid collecting sub-portion 711 includes a second connection aperture (which is not shown). The second connection aperture is in communication with the first connection aperture. The first bonding portion 714 is provided with a fifth connection aperture (which is not shown). The first fluid collecting sub-portion 711 is provided with a sixth connection aperture (which is not shown). The fifth connection aperture is in communication with the sixth connection aperture.

Specifically, the first block portion 712 includes a first substrate portion 75, a second substrate portion 76, and a pipe connecting portion 77. The pipe connecting portion 77 is used to connect the first substrate portion 75 and the second substrate portion 76. The second substrate portion 76 is provided with the first bonding portion 714. The first bonding portion 714 and the first fluid collecting sub-portion 711 are fitted to each other. The first bonding portion 714 and the first fluid collecting sub-portion 711 are fixed to each other, for example, by welding such as furnace welding.

The pipe connecting portion 77 is generally L-shaped One end of the pipe connecting portion 77 is fixed to the first substrate portion 75 by welding, and the other end of the pipe connecting portion 77 is fixed to the second substrate portion 76 by welding. The first substrate portion and the main body portion are arranged parallel to each other. The second substrate portion 76 is fixed to a side portion of the first fluid collecting sub-portion 711, which facilitates the stability of the expansion portion connected with the first substrate portion, and thus facilitates the arrangement of pipe fittings.

The first fluid collecting sub-portion 711 includes a partition portion, a first cavity and a second cavity. The partition portion is used to partition the first cavity and the second cavity. The first connection aperture is in communication with the first cavity. The fifth connection aperture is in communication with the second cavity. Structures of the partition portion, the first cavity and the second cavity may respectively refer to those in the above embodiment.

In the structure illustrated in Figure 35, the first block portion 712 includes a third connection passage 7122 and a fourth connection passage 7124. The third connection passage 7122 is in communication with the first connection aperture. The third connection passage 7122 is in communication with the first interface. The third connection passage 7122 is in communication with the first cavity of the first fluid collecting sub-portion 711. The fourth connection passage 7124 is in communication with the fifth connection aperture and the second interface. The fourth connection passage 7124 is in communication with the second cavity of the first fluid collecting sub-portion 711.

In the structure illustrated in Figure 35, the first interface and the second interface are located at the second substrate portion 76. In this case, the first interface is a port of the third connection passage 7122, and the second interface is a port of the fourth connection passage 7124. The first interface is in communication with the first connection aperture. The second interface is in communication with the fifth connection aperture. The first interface and the second interface are located on the same side of the second substrate portion 76, which facilitates the connection between the external structure and the second substrate portion 76.

Referring to Figure 36, the heat exchange assembly 70' includes an expansion portion 4'. The expansion portion 4' may be used for the throttling and depressurizing of a fluid such as a refrigerant. The heat exchange assembly 70' includes a first interface 7127 and a second interface 7128. The first interface 7127 and the second interface 7128 are located at the expansion portion 4'. In Figure 36, the expansion portion 4' is located on the upper side of the first block portion 712.

The expansion portion 4' includes an orifice, a valve core portion, and a temperature sensing portion 47. The orifice is in communication with the second interface. The valve core portion is driven to move up and down through the action of the temperature sensing portion 47. A space may be left between the valve core portion and a wall portion forming the orifice of the expansion portion 4', or the valve core portion extends into the orifice and blocks the communication between the orifice and the first interface. The orifice and the valve core portion are located inside the expansion portion 4', which is not shown in the figure. The expansion portion 4' may be implemented by a heat expansion valve.

After the expansion portion 4' is located in the first block portion 712, the refrigerant enters the third connection passage from the first interface via the orifice. Then, the refrigerant enters the first cavity of the first fluid collecting sub-portion 711 from the first connection aperture. The refrigerant enters the second fluid collecting portion 72 through the fluid passages inside the main body portions in communication with the first fluid collecting sub-portion. The refrigerant is collected in the second fluid collecting portion 72 and enters the second cavity of the first fluid collecting sub-portion 711 through the fluid passages in the main body portions in communication with the second fluid collecting portion 72. Then, the refrigerant enters the fourth connection passage 7124 via the fifth connection aperture, and then flows away from the second interface.

Similar names in different embodiments have similar structures.

After the refrigerant is throttled and expanded by the expansion portion 4', the refrigerant absorbs the heat of the external part (for example, a battery) on the main body portion in the fluid passages of the main body portion, to reduce the temperature of the external part (for example, the battery) on the main body portion.

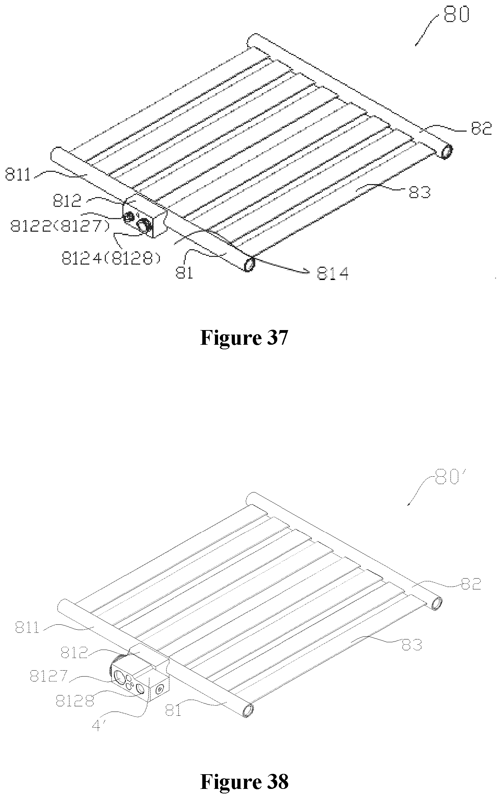

In another embodiment, reference is made to Figures 37 and 38. Figure 37 illustrates a structure of a heat exchange assembly 80, and Figure 38 illustrates a structure of a heat exchange assembly 80'. The heat exchange assembly 80 and the heat exchange assembly 80' each include a first fluid collecting portion 81, main body portions 83 and a second fluid collecting portion 82. The first fluid collecting portion 81 includes a first block portion 812 and a first fluid collecting sub-portion 811. A structure of the first fluid collecting sub-portion 811 may refer to the structure of the first fluid collecting sub-portion 111.

The first block portion 812 and the first fluid collecting sub-portion 811 are fixed to each other by assembling. The first block portion 812 includes a first bonding portion 814. The first bonding portion 814 is fitted to an outer contour of the first fluid collecting sub-portion 811. The first bonding portion 814 is fixed to the first fluid collecting sub-portion 811. The first bonding portion 814 is provided with a first connection aperture (which is not shown). The first connection aperture is in communication with an internal cavity of the first fluid collecting sub-portion 811. The first fluid collecting sub-portion 811 includes a second connection aperture (which is not shown). The second connection aperture is in communication with the first connection aperture. The first bonding portion 814 is provided with a fifth connection aperture (which is not shown). The first fluid collecting sub-portion 811 is provided with a sixth connection aperture (which is not shown). The fifth connection aperture is in communication with the sixth connection aperture.

The first fluid collecting sub-portion 811 includes a partition portion, a first cavity and a second cavity. The partition portion is used to partition the first cavity and the second cavity. A part of the first block portion 812 is located at a position corresponding to the first cavity, and another port of the first block portion 812 is located at a position corresponding to the second cavity.

In the structure illustrated in Figure 37, the first block portion is provided with a first interface 8127 and a second interface 8128. The first interface 8127 is in communication with the first connection aperture. The second interface 8128 is in communication with the fifth connection aperture. The first interface 8127 and the second interface 8128 are located on the same side of the first block portion, which facilitates the connection between the external structure and the first block portion.

The first block portion 812 includes a third connection passage 8122 and a fourth connection passage 8124. The third connection passage 8122 is in communication with the first connection aperture and the first interface 8127. The third connection passage 8122 is in communication with the first cavity of the first fluid collecting sub-portion 811. The fourth connection passage 8124 is in communication with the fifth connection aperture and the second interface 8128. The fourth connection passage 8124 is in communication with the second cavity of the first fluid collecting sub-portion 811. In this embodiment, the first interface is a port of the third connection passage 8122, and the second interface is a port of the fourth connection passage 8124.

Referring to Figure 38, the heat exchange assembly 80' includes an expansion portion 4'. The expansion portion 4' may be used for the throttling and depressurizing of a fluid such as a refrigerant. The heat exchange assembly 80' may further include a first interface 8127 and a second interface 8128. The first interface 8127 and the second interface 8128 are located at the expansion portion 4'. In Figure 38, the expansion portion 4' is located at a side portion of the first block portion 812. A structure of the expansion portion 4' may refer to that in the above embodiment. After the expansion portion 4' is located in the first block portion 812, the refrigerant enters the third connection passage from the first interface via the orifice. Then, the refrigerant enters the first cavity of the first fluid collecting sub-portion 811 from the first connection aperture 815. The refrigerant enters the second fluid collecting portion 82 through the fluid passages in the main body portions in communication with the first fluid collecting sub-portion. The refrigerant is collected in the second fluid collecting portion 82 and enters the second cavity of the first fluid collecting sub-portion 811 through the fluid passages in the main body portions in communication with the second fluid collecting portion 82. Then, the refrigerant enters the fourth connection passage 8124 via the fifth connection aperture, and then flows away from the second interface.

After the refrigerant is throttled and expanded by the expansion portion 4', the refrigerant absorbs the heat of the external part (for example, a battery) on the main body portion in the fluid passages of the main body portion, to reduce the temperature of the external part (for example, the battery) on the main body portion.

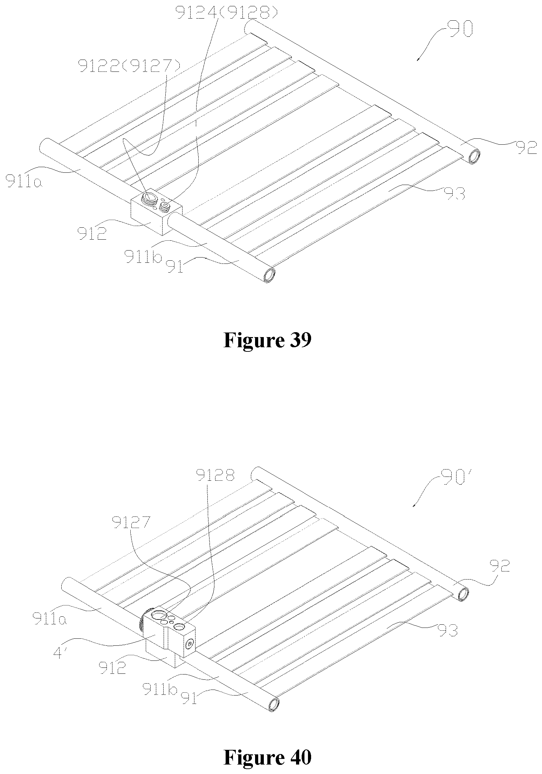

In another embodiment, reference is made to Figures 39, 40, and 49. Figure 39 illustrates a structure of a heat exchange assembly 90, and Figure 40 illustrates a structure of a heat exchange assembly 90'. The heat exchange assembly 90 and the heat exchange assembly 90' each include a first fluid collecting portion 91, main body portions 93, and a second fluid collecting portion 92. The first fluid collecting portion 91 includes a first fluid collecting sub-portion 911a, a second fluid collecting sub-portion 911b, and a first block portion 912. The first fluid collecting sub-portion 911a and the second fluid collecting sub-portion 911b are located on two sides of the first block portion 912. The first fluid collecting sub-portion 911a and the first block portion 912 are fixed to each other, for example, by welding. The second fluid collecting sub-portion 911b and the first block portion 912 are fixed to each other, for example, by welding.

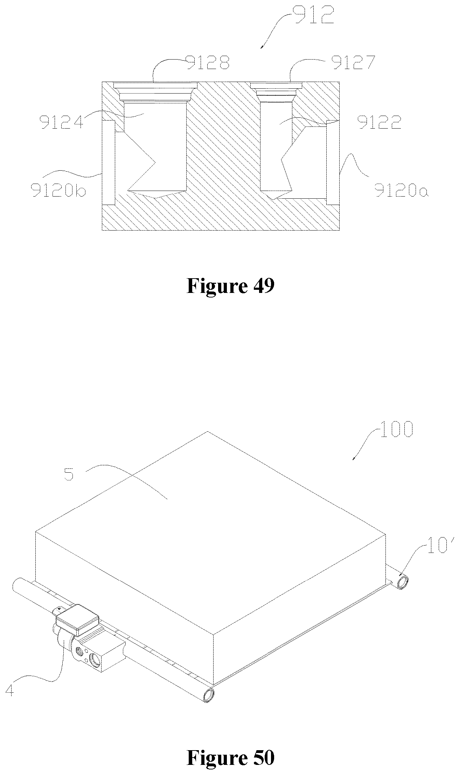

Referring to Figures 40 and 49, the first block portion 912 includes a third connection passage 9122, a fourth connection passage 9124, a first connection aperture 9120a, and a third connection aperture 9120b. The first connection aperture 9120a is in communication with an inner cavity of the first fluid collecting sub-portion 911a. The third connection aperture 9120b is in communication with an internal cavity of the second fluid collecting sub-portion 911b. In this embodiment, end portions of the two fluid collecting sub-portions are respectively inserted into two ends of the first block portion 912, which is similar to the embodiment shown in Figure 20.

An end portion of the first fluid collecting sub-portion is fixed to a wall portion forming the first connection aperture of the first block portion by welding. An end portion of the second fluid collecting sub-portion is fixed to a wall portion forming the third connection aperture of the first block portion by welding.

One end of the first fluid collecting sub-portion 911a is opened, and the other end of the first fluid collecting sub-portion 911a is sealed. The open end of the first fluid collecting sub-portion 911a is fixed to the wall portion forming the first connection aperture 9120a of the first block portion 912 by welding. One end of the second fluid collecting sub-portion 911b is opened, and the other end of the second fluid collecting sub-portion 911b is sealed. The open end of the second fluid collecting sub-portion 911b is fixed to the wall portion forming the third connection aperture 9120b of the first block portion 912 by welding. Structures of the first fluid collecting sub-portion 911a and the second fluid collecting sub-portion 911b may refer to the structures of the first fluid collecting sub-portion 411a, the second fluid collecting sub-portion 411b, and the first fluid collecting sub-portion 111. A connection relationship between the main body portion and each of the first fluid collecting sub-portion 911a and the second fluid collecting sub-portion 911b may refer to the contents about the first fluid collecting sub-portion 411a and the second fluid collecting sub-portion 411b described above, which is not described herein again.

The first connection aperture 9120a and the third connection aperture 9120b are located on two sides of the first block portion.

It should be understood that, the second fluid collecting portion may be formed by a single one, or may be formed by assembling relatively short ones.

In the structure illustrated in Figure 39, the first block portion 912 is provided with a first interface 9127 and a second interface 9128. The first interface 9127 is in communication with the first connection aperture. The second interface 9128 is in communication with the fifth connection aperture. The first interface 9127 and the second interface 9128 are located on the same side of the first block portion, which facilitates the connection between the external structure and the first block portion.

Referring to Figure 40, the heat exchange assembly 90' includes an expansion portion 4'. The expansion portion 4' may be used for the throttling and depressurizing of a fluid such as a refrigerant. The heat exchange assembly 90' may further include a first interface 9127 and a second interface 9128. The first interface 9127 and the second interface 9128 are located at the expansion portion 4'. A structure of the expansion portion 4' may refer to that in the above embodiment.

After the expansion portion 4' is located in the first block part 912, the refrigerant enters the third connection passage from the first interface via the orifice. Then, the refrigerant enters the first cavity of the first fluid collecting sub-portion 911a from the first connection aperture 9120a. The refrigerant enters the second fluid collecting portion 92 through the fluid passages in the main body portions 93 in communication with the first fluid collecting sub-portion 911a. The refrigerant is collected in the second fluid collecting portion 92 and enters the second cavity of the first fluid collecting sub-portion 911 through the fluid passages in the main body portions in communication with the second fluid collecting portion 92. Then, the refrigerant enters the fourth connection passage 9124 via the third connection aperture 9120b, and then flows away from the second interface provided at the expansion portion 4'.

After the refrigerant is throttled and expanded by the expansion portion 4', the refrigerant absorbs the heat of the external part (for example, a battery) on the main body portion in the fluid passages of the main body portion, to reduce the temperature of the external part (for example, the battery) on the main body portion.

Specific features involved in the above embodiments may be arbitrarily combined without causing contradiction.

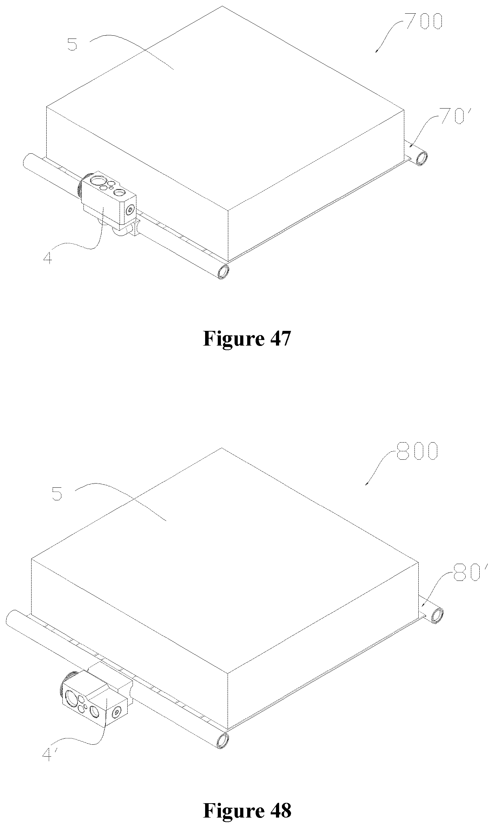

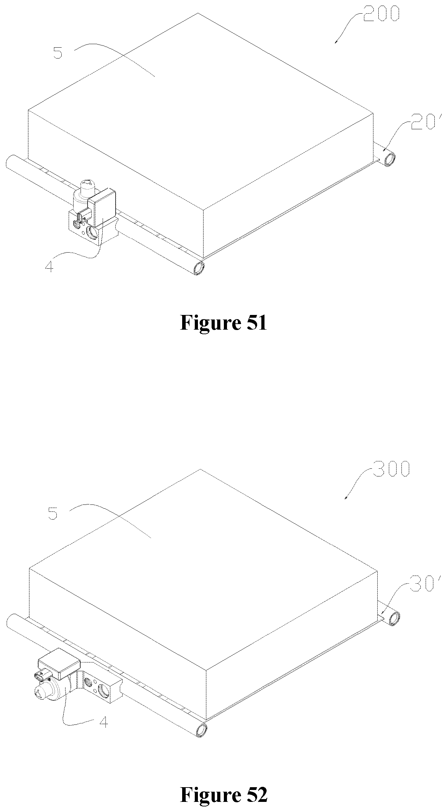

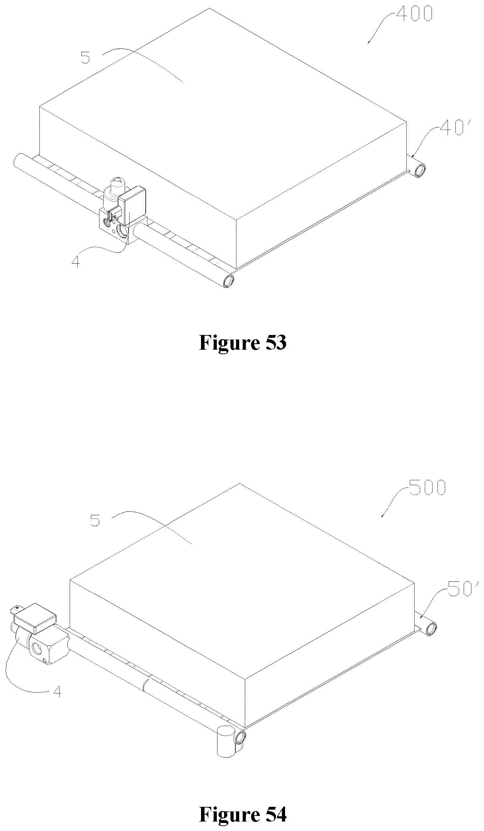

Reference is made to Figures 47, 48, and 50 to 55. Figure 47 illustrates a structure of a battery assembly 700, Figure 48 illustrates a structure of a battery assembly 800, Figure 50 illustrates a structure of a battery assembly 100, Figure 51 illustrates a structure of a battery assembly 200, Figure 52 illustrates a structure of a battery assembly 300, Figure 53 illustrates a structure of a battery assembly 400, Figure 54 illustrates a structure of a battery assembly 500, and Figure 55 illustrates a structure of a battery assembly 600. The battery assemblies 100, 200, 300, 400, 500, 600, 700 and 800 each include a heat exchange assembly and a battery portion 5. The heat exchange assembly includes main body portions. At least a part of the battery portion is in contact with the main body portion or is in contact with the main body portion via a heat conductive element. The battery portion is connected with the main body portion, for example, by a screws or a flange, or in other manners. The heat conductive element includes a metal sheet, a metal plate, or other elements such as a heat conductive glue.

The number of the battery portion is one, two or more. The one, two or more battery portions are in contact with a lateral portion of the main body portion, or are in contact with the main body portion via the heat conductive element. It should be noted that the figure only illustrates a structure in which one battery portion is arranged on a heat exchange assembly, and multiple battery portions may be arranged on the heat exchange assembly. Further, the number of the heat exchange assembly may be multiple, that is, each battery assembly may be provided with one or more heat exchange assemblies.

The battery assembly may be used for, for example, a new-energy vehicle. After a refrigerant is filled in the heat exchange assembly, the battery assembly may be cooled by the refrigerant circularly flowing in the heat exchange assembly. The heat exchange assembly in this embodiment may be one of the heat exchange assemblies 10 to 90 and the heat exchange assemblies 10' to 90' described above. The heat exchange assembly in this embodiment may also be implemented by a variation of the heat exchange assembly described above.

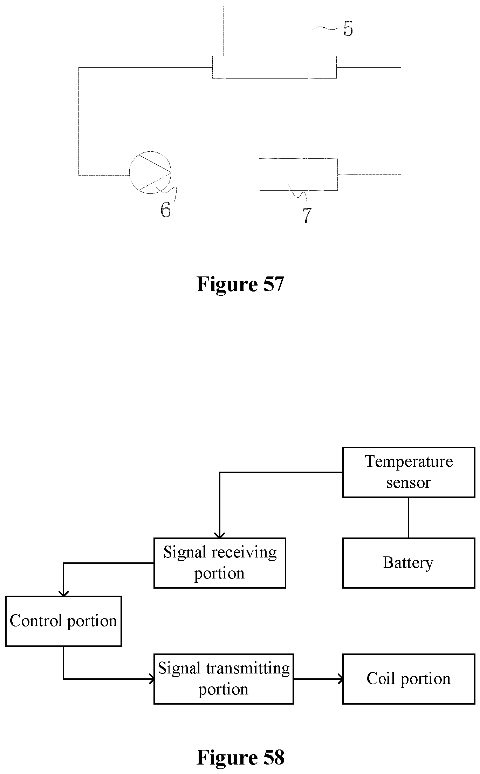

Reference is made to Figure 57, which illustrates a battery heat exchange system. The battery heat exchange system includes a compressor 6, a condenser 7, and a battery assembly. The battery assembly includes a heat exchange assembly and a battery portion 5. The heat exchange assembly is fixed to the battery portion 5. The heat exchange assembly includes main body portions. At least a part of the battery portion is located on the main body portions. The battery assembly further includes a first interface and a second interface. An outlet of the compressor is in communication with the condenser. The condenser is in communication with the first interface of the battery assembly. The second interface of the battery assembly is in communication with an inlet of the compressor.

The high-temperature and high-pressure refrigerant at the outlet of the compressor 6 enters the condenser 7 and releases heat in the condenser 7 to become a high-pressure and lower-temperature refrigerant. The high-pressure and low-temperature refrigerant enters the battery assembly from the first interface of the battery assembly and is throttled and depressurized by an expansion portion of the battery assembly to become a low-pressure and low-temperature refrigerant. The low-pressure and low-temperature refrigerant enters the main body portions of the heat exchange assembly, and absorbs the heat of the battery in the main body portions of the heat exchange assembly to become a low-pressure and high-temperature refrigerant. The low-pressure and high-temperature refrigerant flows away from the second interface of the battery assembly and enters the compressor 6. In this way, the refrigerant achieves the function of cooling the battery in the battery assembly. When used for the heating of the battery, the fluid from the compressor firstly enters the main body portions and releases the heat in the main body portions, and then is throttled and depressurized by the expansion portion. In this case, the main body portion acts as a condenser, and can be used for the heating of the battery.

The battery heat exchange system may be a part of a vehicle heat management system, or may be dedicated to battery cooling/heating, that is, the vehicle is provided with a dedicated battery heat exchange system.

As an implementation, the battery heat exchange system includes an expansion portion 4. Referring to Figure 58, the battery heat exchange system includes a temperature sensor. The temperature sensor is used to measure a temperature of the battery portion. The expansion portion 4 includes a control portion, a signal receiving portion, a signal transmitting portion and a coil portion.

The signal receiving portion is configured to: receive a signal of the temperature sensor or an external feedback signal for the signal of the temperature sensor, and transmit the received signal to the control portion.

The control portion is configured to output a control signal to the signal transmitting portion in response to the signal transmitted from the signal receiving portion.

The signal transmitting portion is configured to transmit a command signal to the coil portion. A core portion of the expansion portion is driven by the coil portion, so that a valve needle is movable in the axial direction of the core portion relative to the wall portion forming the orifice of the core portion, and the valve needle is capable of being spaced from the wall portion forming the orifice of the core portion or the valve needle extends into the orifice.

In the above-mentioned embodiment, the movement of the valve needle is driven by the expansion portion 4 through electrically acting on the coil portion, by which high control accuracy can be obtained. By using the expansion portion 4 in the battery heat exchange system, the expansion portion can fast change the flow rate in response to the temperature of the battery, thereby ensuring that the temperature of each part of the battery is in a target temperature range and a temperature difference between batteries is not large, thus improving the efficiency and the service life of the batteries. Further, with the battery heat exchange system, lower superheat degree control or even zero superheat degree control can be achieved, so that the heat exchange between the heat exchange assembly and the battery is sufficient, thereby improving the COP of the battery heat exchange system.

In the case that the battery heat exchange system is a part of a vehicle heat management system, the battery heat exchange system includes a control portion and a temperature sensor. The temperature sensor is used to measure a temperature of the battery. The expansion portion includes the signal receiving portion and the coil portion.

The control portion is configured to transmit a signal to the signal receiving portion based on information acquired by the temperature sensor.

The signal receiving portion is configured to: receive the signal transmitted by the control portion, and transmit a command signal to the coil portion.

The core portion of the expansion portion is driven by the coil portion, so that the valve needle is movable in the axial direction of the core portion relative to the wall portion forming the orifice of the core portion, and the valve needle is capable of being spaced from the wall portion forming the orifice of the core portion or the valve needle extends into the orifice. The control portion is, for example, a control core of the vehicle heat management system. The expansion portion is controlled directly by the control core of the vehicle heat management system without mounting a control core in the expansion portion, which is convenient to operate and reduces the cost.

## Claims

1. A heat exchange assembly, comprising:
a first fluid collecting portion (11, 21, 31, 41, 51, 61, 71, 81, 91) comprising at least one cavity;
two or more main body portions (13, 23, 33, 43, 53, 63, 73, 83, 93), each comprising two or more fluid passages (131), wherein each of the fluid passages is in communication with the cavity, a passage equivalent diameter of the fluid passage ranges from 10µm to 1000µm, and wherein each of the main body portions comprises a lateral portion (132) and a side face portion (133) that are adjacent to each other, and an area of the side face portion is less than an area of the lateral portion, side face portions of adjacent main body portions among the main body portions are arranged opposite to each other; and
a second fluid collecting portion (12, 22, 32, 42, 52, 62, 72, 82, 92), wherein
the first fluid collecting portion and the second fluid collecting portion are respectively arranged at two sides of the main body portion;
the first fluid collecting portion at least comprises a first block portion (112, 212, 312, 412, 512, 612, 712, 812, 912) and a first fluid collecting sub-portion (111, 211, 311, 411a, 511, 611, 711, 811, 911a) that are fixed to each other, the first block portion comprises a first connection aperture (115, 215, 315, 4120a, 515, 615, 815, 9120a), the first fluid collecting sub-portion comprises a second connection aperture (126, 216, 616), the first connection aperture is in communication with the second connection aperture, the second connection aperture is in communication with the cavity; and
the heat exchange assembly has a first interface, the first interface is capable of being in communication with the first connection aperture, and the first interface is capable of being in communication with the fluid passages,
**characterized in that**,
the heat exchange assembly further comprises an expansion portion (4), and the expansion portion comprises a core portion (401) and a coil portion (402) that are fixed to each other by assembling;
the first block portion (112) comprises a mounting bore passage (1121), a first connection passage (1122) and a second connection passage (1123), the first connection passage (1122) is in communication with the mounting bore passage (1121), the second connection passage (1123) is in communication with the mounting bore passage (1121), the expansion portion (4) is at least partially located in the mounting bore passage (1121), and at least a part of the expansion portion (4) is fixed to a wall portion of the first block portion (112) forming the mounting bore passage (1121) by assembling; and
the core portion (401) comprises a valve needle (405), a valve port (403) and an orifice (404), the valve port (403) of the core portion (401) is in communication with the first connection passage, the orifice (404) is in communication with the second connection passage, most of the valve needle (405) is located above the orifice (404), and the valve needle (405) is movable in an axial direction of the core portion (401) relative to a wall portion of the core portion (401) forming the orifice (404); and
the valve needle (405) is capable of being spaced from the wall portion forming the orifice (404) of the core portion (401), or the valve needle (405) extends into the orifice (404) and blocks the communication between the second connection passage and the valve port (403).

2. The heat exchange assembly according to claim 1, wherein
the main body portion is flat-shaped, a length of the main body portion is much greater than a height of the main body portion, a width of the main body portion is much greater than the height of the main body portion, and the fluid passages are arranged in a length direction of the main body portion;
the main body portion comprises a first end portion (134a) and a second end portion (134b) that are respectively located at two ends of the main body portion, the first end portion is fixed to a wall portion of the first fluid collecting portion by fitting, the second end portion is fixed to a wall portion of the second fluid collecting portion by fitting; the main body portions are arranged approximately parallel to each other and are spaced apart from each other;
the first fluid collecting portion is provided with a plurality of first grooves (113a, 413a), the plurality of first grooves are respectively fitted to first end portions of the main body portions and each extend towards a length direction of the first fluid collecting portion, and the plurality of first grooves are spaced apart from each other;
the second fluid collecting portion is provided with a plurality of second grooves (113b), the plurality of second grooves are respectively fitted to second end portions of the main body portions and each extend towards a length direction of the second fluid collecting portion, and the plurality of second grooves are spaced apart from each other; and
the width of the main body portion ranges from 2cm to 8cm.

3. The heat exchange assembly according to claim 1, wherein
the first fluid collecting portion (41) comprises a second fluid collecting sub-portion (411b), the first fluid collecting sub-portion comprises a first cavity, the second fluid collecting sub-portion comprises a second cavity, and the first block portion (412) is used to connect the first fluid collecting sub-portion (411a) and the second fluid collecting sub-portion (411b);
the first block portion further comprises a third connection aperture (4120b), the first connection aperture is in communication with the first cavity, and the third connection aperture is in communication with the second cavity; and
an end portion of the first fluid collecting sub-portion (411a) is fixed to a wall portion forming the first connection aperture (4120a) of the first block portion (412) by welding, and an end portion of the second fluid collecting sub-portion (411b) is fixed to a wall portion forming the third connection aperture (4120b) of the first block portion (412) by welding.

4. The heat exchange assembly according to claim 3, wherein
a side portion of the first fluid collecting sub-portion (411a) is provided with first grooves (413a), a side portion of the second fluid collecting sub-portion (411b) is provided with first grooves, and a side portion of the second fluid collecting portion (412) is provided with second grooves, wherein the side portions of the first fluid collecting sub-portion (411a), the second fluid collecting sub-portion (411b) and the second fluid collecting portion (412) respectively indicate peripheral positions of the first fluid collecting sub-portion, the second fluid collecting sub-portion and the second fluid collecting portion;
the first grooves of the first fluid collecting sub-portion each extend towards a length direction of the first fluid collecting sub-portion, the first grooves of the second fluid collecting sub-portion each extend towards a length direction of the second fluid collecting sub-portion, and the first grooves of the first fluid collecting sub-portion are spaced apart from each other, the first grooves of the second fluid collecting sub-portion are spaced apart from each other, the second grooves each extend towards a length direction of the second fluid collecting sub-portion, and the second grooves are spaced apart from each other; and
the main body portions are arranged approximately parallel to each other and are spaced apart from each other, each of the main body portions comprises a first end portion (134a) and a second end portion (134b), the first end portion (134a) is fixed to a wall portion forming the first groove of the first fluid collecting sub-portion or a wall portion forming the first groove of the second fluid collecting sub-portion by fitting; and the second end portion (134b) is fixed to a wall portion forming the second groove of the second fluid collecting sub-portion.

5. The heat exchange assembly according to claim 4, wherein the first fluid collecting sub-portion is connected to one side of the first block portion, and the second fluid collecting sub-portion is connected to the other side of the first block portion, a length direction of the first block portion is the same as a length direction of the first fluid collecting portion, a length of the first block portion is at least 50mm, a depth to which the first fluid collecting sub-portion extends is not less than 5mm, a depth to which the second fluid collecting sub-portion extends is not less than 5mm, and the number of the main body portions connected with the first fluid collecting sub-portion is equal to the number of the main body portions connected with the second fluid collecting sub-portion.

6. The heat exchange assembly according to claim 1 or 2, wherein a port communicating the first connection passage (1122) and the mounting bore passage (1121) is defined as a first port (1125), a port communicating the second connection passage (1123) and the mounting bore passage (1121) is defined as a second port (1126), and an axially-extend direction of the mounting bore passage (1121) is taken as a height direction, the first port (1125) and the second port (1126) are at different heights.

7. The heat exchange assembly according to claim 1 or 2, wherein
the first fluid collecting sub-portion (211) comprises a partition portion for partitioning the cavity, and the partition portion is fixed to a wall portion of the first fluid collecting sub-portion (211) by welding;
the first block portion (212) comprises a fifth connection aperture (215), the first fluid collecting sub-portion (211) comprises a sixth connection aperture (218), an equivalent diameter of the fifth connection aperture (215) is greater than or equal to an equivalent diameter of the sixth connection aperture (218), an equivalent diameter of the first connection aperture (215) is greater than or equal to an equivalent diameter of the second connection aperture (216), and the fifth connection aperture (217) and the sixth connection aperture (218) at least partially overlap with each other, the second connection aperture (216) and the sixth connection aperture (218) are respectively located on two sides of the partition portion, and the first connection aperture (215) and the fifth connection aperture (217) are respectively located in regions on the two sides of the partition portion.

8. The heat exchange assembly according to claim 1 or 2 or 6, wherein the heat exchange assembly comprises a second interface, the first block portion (112) comprises a fifth connection aperture (117), and the first block portion (112) comprises a mounting bore passage (1121), a first connection passage (1122), a second connection passage (1123) and a communication passage (1124), the first connection passage (1122) is in communication with the mounting bore passage (1121), the second connection passage (1123) is in communication with the mounting bore passage (1121), the mounting bore passage (1121) extends into the first block portion (112) from an end portion of the first block portion (112), the communication passage (1124) is in communication with the fifth connection aperture (117), the communication passage (1124) is not in communication with the first connection passage (1122) inside the first block portion (112), the communication passage (1124) is not in communication with the second connection passage (1123) inside the first block portion (112), the communication passage (1124) is not in communication with the mounting bore passage (1121) inside the first block portion (112), the second interface is in communication with the communication passage (1124), and the first interface and the second interface are located on the same side of the first block portion (112); and
the first fluid collecting sub-portion comprises a first cavity (1112) and a second cavity (1113), a partition portion is provided to partition the first cavity from the second cavity, the first cavity is in communication with the second connection aperture, the second cavity is in communication with the fifth connection aperture, the second connection passage is in communication with the first cavity, the communication passage is in communication with the second cavity, and the number of the fluid passages in communication with the first cavity is approximately equal to the number of the fluid passages in communication with the second cavity.

9. A battery assembly, comprising:
the heat exchange assembly according to claim 1; and
a battery portion (5), wherein
at least a part of the battery portion is in contact with the main body portion or is in contact with the main body portion via a heat conductive element; and
the battery portion is fixed to the main body portions by assembling.

10. The battery assembly according to claim 9, wherein the expansion portion (4) comprises a control portion, a signal receiving portion, a signal transmitting portion and the coil portion, and wherein
the signal receiving portion is configured to receive an external signal and transmit the external signal to the control portion;
the control portion is configured to output a control signal to the signal transmitting portion in response to the signal transmitted from the signal receiving portion;
the signal transmitting portion is configured to transmit a command signal to the coil portion; and
the core portion of the expansion portion is driven by the coil portion, so that the valve needle is movable in the axial direction of the core portion relative to the wall portion forming the orifice of the core portion, and the valve needle is capable of being spaced from the wall portion forming the orifice of the core portion or the valve needle extends into the orifice.

11. A battery heat exchange system, comprising:
a compressor;
a condenser (7); and
the battery assembly according to claim 9 or 10, wherein
the battery assembly comprises the heat exchange assembly and the battery portion, and the heat exchange assembly is fixed to the battery portion;
the heat exchange assembly comprises the main body portions, and at least a part of the battery portion is in contact with the main body portion or is in contact with the main body portion via a heat conductive element; and
the heat exchange assembly further comprise the first interface and the second interface, an outlet of the compressor is in communication with the condenser, the condenser is in communication with the first interface of the heat exchange assembly, and the second interface of the heat exchange assembly is in communication with an inlet of the compressor.

12. The battery heat exchange system according to claim 11, wherein the battery heat exchange system comprises a control portion and a temperature sensor, and wherein
the temperature sensor is configured to measure a temperature of the battery, and the expansion portion comprises the signal receiving portion and the coil portion;
the control portion of the battery heat exchange system is configured to transmit a signal to the signal receiving portion based on information acquired by the temperature sensor;
the signal receiving portion is configured to: receive the signal transmitted by the control portion of the battery heat exchange system, and transmit a command signal to the coil portion; and
the core portion of the expansion portion is driven by the coil portion, so that the valve needle is movable in the axial direction of the core portion relative to the wall portion forming the orifice of the core portion, and the valve needle is capable of being spaced from the wall portion forming the orifice of the core portion or the valve needle extends into the orifice.

## Patentansprüche

1. Wärmetauscheranordnung, aufweisend:
einen ersten Fluidsammelabschnitt (11, 21, 31, 41, 51, 61, 71, 81, 91), der mindestens einen Hohlraum aufweist;
zwei oder mehr Hauptkörperabschnitte (13, 23, 33, 43, 53, 63, 73, 83, 93), die jeweils zwei oder mehr Fluiddurchlässe (131) aufweisen, wobei jeder der Fluiddurchlässe mit dem Hohlraum in Verbindung steht, ein durchlassäquivalenter Durchmesser des Fluiddurchlasses im Bereich von 10 µm bis 1000 µm liegt, und wobei jeder der Hauptkörperabschnitte einen Lateralabschnitt (132) und einen Seitenflächenabschnitt (133) aufweist, die zueinander benachbart sind, und eine Fläche des Seitenflächenabschnitts kleiner ist als eine Fläche des Lateralabschnitts, wobei Seitenflächenabschnitte von benachbarten Hauptkörperabschnitten unter den Hauptkörperabschnitten einander gegenüberliegend angeordnet sind; und
einen zweiten Fluidsammelabschnitt (12, 22, 32, 42, 52, 62, 72, 82, 92), wobei
der erste Fluidsammelabschnitt bzw. der zweite Fluidsammelabschnitt an zwei Seiten des Hauptkörperabschnitts angeordnet sind;
der erste Fluidsammelabschnitt mindestens einen ersten Blockabschnitt (112, 212, 312, 412, 512, 612, 712, 812, 912) und einen ersten Fluidsammel-Teilabschnitt (111, 211, 311, 411a, 511, 611, 711, 811, 911a) aufweist, die aneinander befestigt sind, wobei der erste Blockabschnitt eine erste Verbindungsöffnung (115, 215, 315, 4120a, 515, 615, 815, 9120a) aufweist, der erste Fluidsammel-Teilabschnitt eine zweite Verbindungsöffnung (126, 216, 616) aufweist, die erste Verbindungsöffnung mit der zweiten Verbindungsöffnung in Verbindung, die zweite Verbindungsöffnung mit dem Hohlraum in Verbindung steht; und
die Wärmetauscheranordnung eine erste Schnittstelle hat, die erste Schnittstelle in der Lage ist, mit der ersten Verbindungsöffnung in Verbindung zu stehen, und die erste Schnittstelle in der Lage ist, mit den Fluiddurchlässen in Verbindung zu stehen,
**dadurch gekennzeichnet, dass**
die Wärmetauscheranordnung darüber hinaus einen Expansionsabschnitt (4) aufweist und der Expansionsabschnitt einen Kernabschnitt (401) und einen Spulenabschnitt (402) aufweist, die durch Zusammenbauen aneinander befestigt sind;
der erste Blockabschnitt (112) einen Montagebohrungsdurchlass (1121), einen ersten Verbindungsdurchlass (1122) und ein zweiten Verbindungsdurchlass (1123) aufweist, wobei der erste Verbindungsdurchlass (1122) mit dem Montagebohrungsdurchlass (1121) in Verbindung steht, der zweite Verbindungsdurchlass (1123) mit dem Montagebohrungsdurchlass (1121) in Verbindung steht, der Expansionsabschnitt (4) mindestens teilweise im Montagebohrungsdurchlass (1121) sitzt und zumindest ein Teil des Expansionsabschnitts (4) durch Zusammenbauen an einem Wandabschnitt des ersten Blockabschnitts (112) befestigt ist, der den Montagebohrungsdurchlass (1121) bildet; und
der Kernabschnitt (401) eine Ventilnadel (405), einen Ventilanschluss (403) und eine Öffnung (404) aufweist, wobei der Ventilanschluss (403) des Kernabschnitts (404) mit dem ersten Verbindungsdurchlass in Verbindung steht, die Öffnung (404) mit dem zweiten Verbindungsdurchlass in Verbindung steht, der Großteil der Ventilnadel (405) sich oberhalb der Öffnung (404) befindet und die Ventilnadel (405) in einer Axialrichtung des Kernabschnitts (401) relativ zu einem Wandabschnitt des Kernabschnitts (401), der die Öffnung (404) bildet, bewegbar ist; und
die Ventilnadel (405) in der Lage ist, von dem Wandabschnitt, der die Öffnung (404) des Kernabschnitts (401) bildet, beabstandet zu sein, oder die Ventilnadel (405) sich in die Öffnung (404) erstreckt und die Durchgängigkeit zwischen dem zweiten Verbindungsdurchlass und dem Ventilanschluss (403) blockiert.

2. Wärmetauscheranordnung nach Anspruch 1, wobei
der Hauptkörperabschnitt eine flache Form hat, eine Länge des Hauptkörperabschnitts viel größer als eine Höhe des Hauptkörperabschnitts ist, eine Breite des Hauptkörperabschnitts viel größer als die Höhe des Hauptkörperabschnitts ist und die Fluiddurchlässe in einer Längenrichtung des Hauptkörperabschnitts angeordnet sind;
der Hauptkörperabschnitt einen ersten Endabschnitt (134a) bzw. einen zweiten Endabschnitt (134b) aufweist, die sich an zwei Enden des Hauptkörperabschnitts befinden, der erste Endabschnitt an einem Wandabschnitt des ersten Fluidsammelabschnitts durch Einpassen befestigt ist, der zweite Endabschnitt an einem Wandabschnitt des zweiten Fluidsammelabschnitts durch Einpassen befestigt ist; die Hauptkörperabschnitte ungefähr parallel zueinander angeordnet und voneinander beabstandet sind;
der erste Fluidsammelabschnitt mit einer Vielzahl von ersten Nuten (113a, 413a) versehen ist, die Vielzahl von ersten Nuten jeweils an ersten Endabschnitten der Hauptkörperabschnitte eingepasst sind und sich jeweils zu einer Längenrichtung des ersten Fluidsammelabschnitts erstrecken, und die Vielzahl von ersten Nuten voneinander beabstandet sind;
der zweite Fluidsammelabschnitt mit einer Vielzahl von zweiten Nuten (113b) versehen ist, die Vielzahl von zweiten Nuten jeweils an zweiten Endabschnitten der Hauptkörperabschnitte eingepasst sind und sich jeweils zu einer Längenrichtung des zweiten Fluidsammelabschnitts erstrecken, und die Vielzahl von zweiten Nuten voneinander beabstandet sind; und
die Breite des Hauptkörperabschnitts im Bereich zwischen 2 cm und 8 cm liegt.

3. Wärmetauscheranordnung nach Anspruch 1, wobei
der erste Fluidsammelabschnitt (41) einen zweiten Fluidsammel-Teilabschnitt (411b) aufweist, der erste Fluidsammel-Teilabschnitt einen ersten Hohlraum aufweist, der zweite Fluidsammel-Teilabschnitt einen zweiten Hohlraum aufweist und der erste Blockabschnitt (412) dazu verwendet wird, den ersten Fluidsammel-Teilabschnitt (411a) und zweiten Fluidsammel-Teilabschnitt (411b) zu verbinden;
der erste Blockabschnitt darüber hinaus eine dritte Verbindungsöffnung (4120b) aufweist, die erste Verbindungsöffnung mit dem ersten Hohlraum in Verbindung steht und die dritte Verbindungsöffnung mit dem zweiten Hohlraum in Verbindung steht; und
ein Endabschnitt des ersten Fluidsammel-Teilabschnitts (411a) an einem Wandabschnitt, der die erste Verbindungsöffnung (4120a) des ersten Blockabschnitts (412) bildet, durch Schweißen befestigt ist, und ein Endabschnitt des zweiten Fluidsammel-Teilabschnitts (411b) an einem Wandabschnitt, der die dritte Verbindungsöffnung (4120b) des ersten Blockabschnitts (412) bildet, durch Schweißen befestigt ist.

4. Wärmetauscheranordnung nach Anspruch 3, wobei
ein Seitenabschnitt des ersten Fluidsammel-Teilabschnitts (411a) mit ersten Nuten (413a) versehen ist, ein Seitenabschnitt des zweiten Fluidsammel-Teilabschnitts (411b) mit ersten Nuten versehen ist, und ein Seitenabschnitt des zweiten Fluidsammelabschnitts (412) mit zweiten Nuten versehen ist, wobei die Seitenabschnitte des ersten Fluidsammel-Teilabschnitts (411a), des zweiten Fluidsammel-Teilabschnitts (411b) und des zweiten Fluidsammelabschnitts (412) Umfangspositionen des ersten Fluidsammel-Teilabschnitts, des zweiten Fluidsammel-Teilabschnitts bzw. des zweiten Fluidsammelabschnitts anzeigen;
die ersten Nuten des ersten Fluidsammel-Teilabschnitts sich jeweils zu einer Längenrichtung des ersten Fluidsammel-Teilabschnitts erstrecken, die ersten Nuten des zweiten Fluidsammel-Teilabschnitts sich jeweils zu einer Längenrichtung des zweiten Fluidsammel-Teilabschnitts erstrecken und die ersten Nuten des ersten Fluidsammel-Teilabschnitts voneinander beabstandet sind, die ersten Nuten des zweiten Fluidsammel-Teilabschnitts voneinander beabstandet sind, die zweiten Nuten sich jeweils zu einer Längenrichtung des zweiten Fluidsammel-Teilabschnitts erstrecken und die zweiten Nuten voneinander beabstandet sind; und
die Hauptkörperabschnitte ungefähr parallel zueinander angeordnet und voneinander beabstandet sind, jeder der Hauptkörperabschnitte einen ersten Endabschnitt (134a) und einen zweiten Endabschnitt (134b) aufweist, der erste Endabschnitt (134a) durch Einpassen an einem Wandabschnitt befestigt ist, der die erste Nut des ersten Fluidsammel-Teilabschnitts bildet, oder an einem Wandabschnitt, der die erste Nut des zweiten Fluidsammel-Teilabschnitts bildet; und der zweite Endabschnitt (134b) an einem Wandabschnitt befestigt ist, der die zweite Nut des zweiten Fluidsammel-Teilabschnitts bildet.

5. Wärmetauscheranordnung nach Anspruch 4, wobei der erste Fluidsammel-Teilabschnitt mit einer Seite des ersten Blockabschnitts und der zweite Fluidsammel-Teilabschnitt mit der anderen Seite des ersten Blockabschnitts verbunden ist, wobei eine Längenrichtung des ersten Blockabschnitts dieselbe wie eine Längenrichtung des ersten Fluidsammelabschnitts ist, eine Länge des ersten Blockabschnitts mindestens 50 mm beträgt, eine Tiefe, bis auf die sich der erste Fluidsammel-Teilabschnitt erstreckt, nicht kleiner ist als 5 mm, eine Tiefe, bis auf die sich der zweite Fluidsammel-Teilabschnitt erstreckt, nicht kleiner ist als 5 mm, und die Anzahl der Hauptkörperabschnitte, die mit dem ersten Fluidsammel-Teilabschnitt verbunden sind, gleich der Anzahl der Hauptkörperabschnitte ist, die mit dem zweiten Fluidsammel-Teilabschnitt verbunden sind.

6. Wärmetauscheranordnung nach Anspruch 1 oder 2, wobei ein Anschluss, der die Durchgängigkeit zwischen dem ersten Verbindungsdurchlass (1122) und dem Montagebohrungsdurchlass (1121) herstellt, als erster Anschluss (1125) definiert ist, ein Anschluss, der die Durchgängigkeit zwischen dem zweiten Verbindungsdurchlass (1123) und der Montagebohrungsdurchlass (1121) herstellt, als zweiter Anschluss (1126) definiert ist, und eine Axialerstreckungsrichtung des Montagebohrungsdurchlasses (1121) als Höhenrichtung hergenommen wird, wobei der erste Anschluss (1125) und der zweite Anschluss (1126) auf unterschiedlichen Höhen liegen.

7. Wärmetauscheranordnung nach Anspruch 1 oder 2, wobei
der erste Fluidsammel-Teilabschnitt (211) einen Unterteilungsabschnitt zum Unterteilen des Hohlraums aufweist und der Unterteilungsabschnitt an einem Wandabschnitt des ersten Fluidsammel-Teilabschnitts (211) durch Schweißen befestigt ist;
der erste Blockabschnitt (212) eine fünfte Verbindungsöffnung (215) aufweist, der erste Fluidsammel-Teilabschnitt (211) eine sechste Verbindungsöffnung (218) aufweist, ein Äquivalentdurchmesser der fünften Verbindungsöffnung (215) größer als oder gleich einem Äquivalentdurchmesser der sechsten Verbindungsöffnung (218) ist, ein Äquivalentdurchmesser der ersten Verbindungsöffnung (215) größer als oder gleich einem Äquivalentdurchmesser der zweiten Verbindungsöffnung (216) ist, und die fünfte Verbindungsöffnung (217) und sechste Verbindungsöffnung (218) einander zumindest teilweise überlappen, wobei sich die zweite Verbindungsöffnung (216) bzw. sechste Verbindungsöffnung (218) an zwei Seiten des Unterteilungsabschnitts befinden, und sich die erste Verbindungsöffnung (215) bzw. fünfte Verbindungsöffnung (217) in Bereichen auf den zwei Seiten des Unterteilungsabschnitts befinden.

8. Wärmetauscheranordnung nach Anspruch 1 oder 2 oder 6, wobei die Wärmetauscheranordnung eine zweite Schnittstelle aufweist, der erste Blockabschnitt (112) eine fünfte Verbindungsöffnung (117) aufweist und der erste Blockabschnitt (112) einen Montagebohrungsdurchlass (1121), einen ersten Verbindungsdurchlass (1122), einen zweiten Verbindungsdurchlass (1123) und einen Durchgängigkeitsdurchlass (1124) aufweist, wobei der erste Verbindungsdurchlass (1122) mit dem Montagebohrungsdurchlass (1121) in Verbindung steht, der zweite Verbindungsdurchlass (1123) mit dem Montagebohrungsdurchlass (1121) in Verbindung steht, der Montagebohrungsdurchlass (1121) sich von einem Endabschnitt des ersten Blockabschnitts (112) in den ersten Blockabschnitt (112) erstreckt, der Durchgängigkeitsdurchlass (1124) mit der fünften Verbindungsöffnung (117) in Verbindung steht, der Durchgängigkeitsdurchlass (1124) nicht mit dem ersten Verbindungsdurchlass (1122) innerhalb des ersten Blockabschnitts (112) in Verbindung steht, der Durchgängigkeitsdurchlass (1124) nicht mit dem zweiten Verbindungsdurchlass (1123) innerhalb des ersten Blockabschnitts (112) in Verbindung steht, der Durchgängigkeitsdurchlass (1124) nicht mit dem Montagebohrungsdurchlass (1121) innerhalb des ersten Blockabschnitts (112) in Verbindung steht, die zweite Schnittstelle mit dem Durchgängigkeitsdurchlass (1124) in Verbindung steht und sich die erste Schnittstelle und zweite Schnittstelle auf derselben Seite des ersten Blockabschnitts (112) befinden; und
der erste Fluidsammel-Teilabschnitt einen ersten Hohlraum (1112) und einen zweiten Hohlraum (1113) aufweist, ein Unterteilungsabschnitt vorgesehen ist, um den ersten Hohlraum vom zweiten Hohlraum abzutrennen, der erste Hohlraum mit der zweiten Verbindungsöffnung in Verbindung steht, der zweite Hohlraum mit der fünften Verbindungsöffnung in Verbindung steht, der zweite Verbindungsdurchlass mit dem ersten Hohlraum in Verbindung steht, der Durchgängigkeitsdurchlass mit dem zweiten Hohlraum in Verbindung steht, und die Anzahl der Fluiddurchlässe, die mit dem ersten Hohlraum in Verbindung stehen, ungefähr gleich der Anzahl der Fluiddurchlässe entspricht, die mit dem zweiten Hohlraum in Verbindung stehen.

9. Batterieanordnung, aufweisend:
die Wärmetauscheranordnung nach Anspruch 1; und
einen Batterieabschnitt (5), wobei
zumindest ein Teil des Batterieabschnitts in Kontakt mit dem Hauptkörperabschnitt ist oder über ein wärmeleitendes Element in Kontakt mit dem Hauptkörperabschnitt ist; und
der Batterieabschnitt an den Hauptkörperabschnitten durch Zusammenbauen befestigt ist.

10. Batterieanordnung nach Anspruch 9, wobei der Expansionsabschnitt (4) einen Steuerabschnitt, einen Signalempfangsabschnitt, einen Signalsendeabschnitt und den Spulenabschnitt aufweist, und wobei
der Signalempfangsabschnitt dafür ausgelegt ist, ein externes Signal zu empfangen und das externe Signal an den Steuerabschnitt zu senden;
der Steuerabschnitt dafür ausgelegt ist, im Ansprechen auf das vom Signalempfangsabschnitt gesendete Signal ein Steuersignal an den Signalsendeabschnitt auszugeben;
der Signalsendeabschnitt dafür ausgelegt ist, ein Befehlssignal an den Spulenabschnitt zu senden; und
der Kernabschnitt des Expansionsabschnitts durch den Spulenabschnitt angesteuert wird, so dass die Ventilnadel in der Axialrichtung des Kernabschnitts relativ zu dem Wandabschnitt, der die Öffnung des Kernabschnitts bildet, bewegbar ist, und die Ventilnadel in der Lage ist, vom Wandabschnitt beabstandet zu sein, der die Öffnung des Kernabschnitts bildet, oder die Ventilnadel sich in die Öffnung erstreckt.

11. Batteriewärmeaustauschsystem, aufweisend:
einen Kompressor;
einen Kondensator (7); und
die Batterieanordnung nach Anspruch 9 oder 10, wobei
die Batterieanordnung die Wärmetauscheranordnung und den Batterieabschnitt aufweist und die Wärmetauscheranordnung am Batterieabschnitt befestigt ist;
die Wärmetauscheranordnung die Hauptkörperabschnitte aufweist und zumindest ein Teil des Batterieabschnitts in Kontakt mit dem Hauptkörperabschnitt ist oder über ein wärmeleitendes Element in Kontakt mit dem Hauptkörperabschnitt ist; und
die Wärmetauscheranordnung darüber hinaus die erste Schnittstelle und die zweite Schnittstelle aufweist, ein Ausgang des Kompressor mit dem Kondensator in Verbindung steht, der Kondensator mit der ersten Schnittstelle der Wärmetauscheranordnung in Verbindung steht und die zweite Schnittstelle der Wärmetauscheranordnung mit einem Eingang des Kompressors in Verbindung steht.

12. Batteriewärmeaustauschsystem nach Anspruch 11, wobei das Batteriewärmeaustauschsystem einen Steuerabschnitt und einen Temperatursensor aufweist, und wobei
der Temperatursensor dafür ausgelegt ist, eine Temperatur der Batterie zu messen, und der Expansionsabschnitt den Signalempfangsabschnitt und den Spulenabschnitt aufweist;
der Steuerabschnitt des Batteriewärmeaustauschsystems dafür ausgelegt ist, beruhend auf vom Temperatursensor erfassten Informationen ein Signal an den Signalempfangsabschnitt zu senden;
der Signalempfangsabschnitt dafür ausgelegt ist, das vom Steuerabschnitt des Batteriewärmeaustauschsystems gesendete Signal zu empfangen und ein Befehlssignal an den Spulenabschnitt zu senden; und
der Kernabschnitt des Expansionsabschnitts durch den Spulenabschnitt angesteuert wird, so dass die Ventilnadel in der Axialrichtung des Kernabschnitts relativ zum Wandabschnitt, der die Öffnung des Kernabschnitts bildet, bewegbar ist, und die Ventilnadel in der Lage ist, vom Wandabschnitt, der die Öffnung des Kernabschnitts bildet, beabstandet zu sein, oder die Ventilnadel sich in die Öffnung erstreckt.

## Revendications

1. Ensemble d'échange de chaleur, comprenant :
une première partie de collecte de fluide (11, 21, 31, 41, 51, 61, 71, 81, 91) comprenant au moins une cavité ;
deux ou plus de deux parties corps principal (13, 23, 33, 43, 53, 63, 73, 83, 93), comprenant chacune deux ou plus de deux passages de fluide (131), sachant que chacun des passages de fluide est en communication avec la cavité, un diamètre de passage équivalent du passage de fluide est compris entre 10 pm et 1000 µm, et sachant que chacune des parties corps principal comprend une partie latérale (132) et une partie face de côté (133) qui sont adjacentes l'une à l'autre, et une aire de la partie face de côté est inférieure à une aire de la partie latérale, des parties face de côté de parties corps principal adjacentes parmi les parties corps principal sont agencées de manière opposée les unes aux autres ; et
une deuxième partie de collecte de fluide (12, 22, 32, 42, 52, 62, 72, 82, 92), sachant que
la première partie de collecte de fluide et la deuxième partie de collecte de fluide sont agencées respectivement de deux côtés de la partie corps principal ;
la première partie de collecte de fluide comprend au moins une première partie bloc (112, 212, 312, 412, 512, 612, 712, 812, 912) et une première sous-partie de collecte de fluide (111, 211, 311, 411a, 511, 611, 711, 811, 911a) qui sont fixées l'une à l'autre, la première partie bloc comprend une première ouverture de connexion (115, 215, 315, 4120a, 515, 615, 815, 9120a), la première sous-partie de collecte de fluide comprend une deuxième ouverture de connexion (126, 216, 616), la première ouverture de connexion est en communication avec la deuxième ouverture de connexion, la deuxième ouverture de connexion est en communication avec la cavité ; et
l'ensemble d'échange de chaleur a une première interface, la première interface est apte à être en communication avec la première ouverture de connexion, et la première interface est apte à être en communication avec les passages de fluide,
**caractérisé en ce que**
l'ensemble d'échange de chaleur comprend en outre une partie expansion (4), et la partie expansion comprend une partie noyau (401) et une partie bobine (402) qui sont fixées l'une à l'autre par assemblage ;
la première partie bloc (112) comprend un passage d'alésage de montage (1121), un premier passage de connexion (1122) et un deuxième passage de connexion (1123), le premier passage de connexion (1122) est en communication avec le passage d'alésage de montage (1121), le deuxième passage de connexion (1123) est en communication avec le passage d'alésage de montage (1121), la partie expansion (4) est située au moins en partie dans le passage d'alésage de montage (1121), et au moins une part de la partie d'expansion (4) est fixée à une partie paroi de la première partie bloc (112) formant le passage d'alésage de montage (1121) par assemblage ; et
la partie noyau (401) comprend un pointeau de soupape (405), un port de soupape (403) et un orifice (404), le port de soupape (403) de la partie noyau (404) est en communication avec le premier passage de connexion, l'orifice (404) est en communication avec le deuxième passage de connexion, la majeure part du pointeau de soupape (405) est située au-dessus de l'orifice (404), et le pointeau de soupape (405) est mobile dans une direction axiale de la partie noyau (401) par rapport à une partie paroi de la partie noyau (401) formant l'orifice (404) ; et
le pointeau de soupape (405) est apte à être espacé de la partie paroi formant l'orifice (404) de la partie noyau (401), ou le pointeau de soupape (405) s'étend dans l'orifice (404) et bloque la communication entre le deuxième passage de connexion et le port de soupape (403).

2. L'ensemble d'échange de chaleur selon la revendication 1, sachant que
la partie corps principal est de forme plate, une longueur de la partie corps principal est beaucoup plus grande qu'une hauteur de la partie corps principal, une largeur de la partie corps principal est beaucoup plus grande que la hauteur de la partie corps principal, et les passages de fluide sont agencés dans une direction de longueur de la partie corps principal ;
la partie corps principal comprend une première partie d'extrémité (134a) et une deuxième partie d'extrémité (134b) qui sont respectivement situées à deux extrémités de la partie corps principal, la première partie d'extrémité est fixée à une partie paroi de la première partie de collecte de fluide par ajustage, la deuxième partie d'extrémité est fixée à une partie paroi de la deuxième partie de collecte de fluide par ajustage ; les parties corps principal sont agencées de manière sensiblement parallèle les unes aux autres et sont espacées les unes aux autres ;
la première partie de collecte de fluide est pourvue d'une pluralité de premières rainures (113a, 413a), la pluralité de premières rainures sont respectivement ajustées à des premières parties d'extrémité des parties corps principal et s'étendent chacune vers une direction de longueur de la première partie de collecte de fluide, et la pluralité de premières rainures sont espacées les unes des autres ;
la deuxième partie de collecte de fluide est pourvue d'une pluralité de deuxièmes rainures (113b), la pluralité de deuxièmes rainures sont respectivement ajustées à des deuxièmes parties d'extrémité des parties corps principal et s'étendent chacune vers une direction de longueur de la deuxième partie de collecte de fluide, et la pluralité de deuxièmes rainures sont espacées les unes des autres ; et
la largeur de la partie corps principal est comprise entre 2 cm et 8 cm.

3. L'ensemble d'échange de chaleur selon la revendication 1, sachant que
la première partie de collecte de fluide (41) comprend une deuxième sous-partie de collecte de fluide (411b), la première sous-partie de collecte de fluide comprend une première cavité, la deuxième sous-partie de collecte de fluide comprend une deuxième cavité, et la première partie bloc (412) est utilisée pour connecter la première sous-partie de collecte de fluide (411a) et la deuxième sous-partie de collecte de fluide (411b) ;
la première partie bloc comprend en outre une troisième ouverture de connexion (4120b), la première ouverture de connexion est en communication avec la première cavité, et la troisième ouverture de connexion est en communication avec la deuxième cavité ; et
une partie d'extrémité de la première sous-partie de collecte de fluide (411a) est fixée à une partie paroi formant la première ouverture de connexion (4120a) de la première partie bloc (412) par soudage, et une partie d'extrémité de la deuxième sous-partie de collecte de fluide (411b) est fixée à une partie paroi formant la troisième ouverture de connexion (4120b) de la première partie bloc (412) par soudage.

4. L'ensemble d'échange de chaleur selon la revendication 3, sachant que
une partie latérale de la première sous-partie de collecte de fluide (411a) est pourvue de premières rainures (413a), une partie latérale de la deuxième sous-partie de collecte de fluide (411b) est pourvue de premières rainures, et une partie latérale de la deuxième partie de collecte de fluide (412) est pourvue de deuxièmes rainures, sachant que les parties latérales de la première sous-partie de collecte de fluide (411a), de la deuxième sous-partie de collecte de fluide (411b) et de la deuxième partie de collecte de fluide (412) indiquent respectivement des positions périphériques de la première sous-partie de collecte de fluide, de la deuxième sous-partie de collecte de fluide et de la deuxième partie de collecte de fluide ;
les premières rainures de la première sous-partie de collecte de fluide s'étendent chacune vers une direction de longueur de la première sous-partie de collecte de fluide, les premières rainures de la deuxième sous-partie de collecte de fluide s'étendent chacune vers une direction de longueur de la deuxième sous-partie de collecte de fluide, et les premières rainures de la première sous-partie de collecte de fluide sont espacées les unes des autres, les premières rainures de la deuxième sous-partie de collecte de fluide sont espacées les unes des autres, les deuxièmes rainures s'étendent chacune vers une direction de longueur de la deuxième sous-partie de collecte de fluide, et les deuxièmes rainures sont espacées les unes des autres ; et
les parties corps principal sont agencées de manière sensiblement parallèle les unes aux autres et sont espacées les unes des autres, chacune des parties corps principal comprend une première partie d'extrémité (134a) et une deuxième partie d'extrémité (134b), la première partie d'extrémité (134a) est fixée à une partie paroi formant la première rainure de la première sous-partie de collecte de fluide ou une partie paroi formant la première rainure de la deuxième sous-partie de collecte de fluide par ajustage ; et la deuxième partie d'extrémité (134b) est fixée à une partie paroi formant la deuxième rainure de la deuxième sous-partie de collecte de fluide.

5. L'ensemble d'échange de chaleur selon la revendication 4, sachant que la première sous-partie de collecte de fluide est connectée à un côté de la première partie bloc, et la deuxième sous-partie de collecte de fluide est connectée à l'autre côté de la première partie bloc, une direction de longueur de la première partie bloc est la même qu'une direction de longueur de la première partie de collecte de fluide, une longueur de la première partie bloc est d'au moins 50 mm, une profondeur à laquelle la première sous-partie de collecte de fluide s'étend n'est pas inférieure à 5 mm, une profondeur à laquelle la deuxième sous-partie de collecte de fluide s'étend n'est pas inférieure à 5 mm, et le nombre des parties corps principal connectées à la première sous-partie de collecte de fluide est égal au nombre des parties corps principal connectées à la deuxième sous-partie de collecte de fluide.

6. L'ensemble d'échange de chaleur selon la revendication 1 ou 2, sachant qu'un port faisant communiquer le premier passage de connexion (1122) et le passage d'alésage de montage (1121) est définie comme premier port (1125), un port faisant communiquer le deuxième passage de connexion (1123) et le passage d'alésage de montage (1121) est définie comme deuxième port (1126), et une direction d'extension axiale du passage d'alésage de montage (1121) est prise comme direction de hauteur, le premier port (1125) et le deuxième port (1126) sont à des hauteurs différentes.

7. L'ensemble d'échange de chaleur selon la revendication 1 ou 2, sachant que
la première sous-partie de collecte de fluide (211) comprend une partie de séparation destinée à séparer la cavité, et la partie de séparation est fixée à une partie paroi de la première sous-partie de collecte de fluide (211) par soudage ;
la première partie bloc (212) comprend une cinquième ouverture de connexion (215), la première sous-partie de collecte de fluide (211) comprend une sixième ouverture de connexion (218), un diamètre équivalent de la cinquième ouverture de connexion (215) est supérieur ou égal à un diamètre équivalent de la sixième ouverture de connexion (218), un diamètre équivalent de la première ouverture de connexion (215) est supérieur ou égal à un diamètre équivalent de la deuxième ouverture de connexion (216), et la cinquième ouverture de connexion (217) et la sixième ouverture de connexion (218) se chevauchent en partie l'une l'autre, la deuxième ouverture de connexion (216) et la sixième ouverture de connexion (218) sont situées respectivement de deux côtés de la partie de séparation, et la première ouverture de connexion (215) et la cinquième ouverture de connexion (217) sont situées respectivement dans des régions des deux côtés de la partie de séparation.

8. L'ensemble d'échange de chaleur selon la revendication 1 ou 2 ou 6, sachant que l'ensemble d'échange de chaleur comprend une deuxième interface, la première partie bloc (112) comprend une cinquième ouverture de connexion (117), et la première partie bloc (112) comprend un passage d'alésage de montage (1121), un premier passage de connexion (1122), un deuxième passage de connexion (1123) et un passage de communication (1124), le premier passage de connexion (1122) est en communication avec le passage d'alésage de montage (1121), le deuxième passage de connexion (1123) est en communication avec le passage d'alésage de montage (1121), le passage d'alésage de montage (1121) s'étend dans la première partie bloc (112) depuis une partie d'extrémité de la première partie bloc (112), le passage de communication (1124) est en communication avec la cinquième ouverture de connexion (117), le passage de communication (1124) n'est pas en communication avec le premier passage de connexion (1122) à l'intérieur de la première partie bloc (112), le passage de communication (1124) n'est pas en communication avec le deuxième passage de connexion (1123) à l'intérieur de la première partie bloc (112), le passage de communication (1124) n'est pas en communication avec le passage d'alésage de montage (1121) à l'intérieur de la première partie bloc (112), la deuxième interface est en communication avec le passage de communication (1124), et la première interface et la deuxième interface sont situées du même côté de la première partie bloc (112) ; et
la première sous-partie de collecte de fluide comprend une première cavité (1112) et une deuxième cavité (1113), une partie de séparation est prévue pour séparer la première cavité de la deuxième cavité, la première cavité est en communication avec la deuxième ouverture de connexion, la deuxième cavité est en communication avec la cinquième ouverture de connexion, le deuxième passage de connexion est en communication avec la première cavité, le passage de communication est en communication avec la deuxième cavité, et le nombre des passages de fluide en communication avec la première cavité est sensiblement égal au nombre des passages de fluide en communication avec la deuxième cavité.

9. Ensemble batterie, comprenant :
l'ensemble d'échange de chaleur selon la revendication 1 ; et
une partie batterie (5), sachant que
au moins une part de la partie batterie est en contact avec la partie corps principal ou est en contact avec la partie corps principal via un élément conducteur de chaleur ; et
la partie batterie est fixée aux parties corps principal par assemblage.

10. L'ensemble batterie selon la revendication 9, sachant que la partie expansion (4) comprend une partie commande, une partie réception de signal, une partie émission de signal et la partie bobine, et sachant que
la partie réception de signal est configurée pour recevoir un signal externe et émettre le signal externe vers la partie commande ;
la partie commande est configurée pour sortir un signal de commande vers la partie émission de signal en réponse au signal émis depuis la partie réception de signal ;
la partie émission de signal est configurée pour émettre un signal de consigne vers la partie bobine ; et
la partie noyau de la partie expansion est entraînée par la partie bobine, de telle sorte que le pointeau de soupape soit mobile dans la direction axiale de la partie noyau par rapport à la partie paroi formant l'orifice de la partie noyau, et le pointeau de soupape est apte à être espacé de la partie paroi formant l'orifice de la partie noyau ou le pointeau de soupape s'étend dans l'orifice.

11. Système d'échange de chaleur de batterie, comprenant :
un compresseur ;
un condenseur (7) ; et
l'ensemble batterie selon la revendication 9 ou 10, sachant que
l'ensemble batterie comprend l'ensemble d'échange de chaleur et la partie batterie, et l'ensemble d'échange de chaleur est fixé à la partie batterie ;
l'ensemble d'échange de chaleur comprend les parties corps principal, et au moins une part de la partie batterie est en contact avec la partie corps principal ou est en contact avec la partie corps principal via un élément conducteur de chaleur ; et
l'ensemble d'échange de chaleur comprend en outre la première interface et la deuxième interface, une sortie du compresseur est en communication avec le condenseur, le condenseur est en communication avec la première interface de l'ensemble d'échange de chaleur, et la deuxième interface de l'ensemble d'échange de chaleur est en communication avec une entrée du compresseur.

12. Le système d'échange de chaleur de batterie selon la revendication 11, sachant que le système d'échange de chaleur de batterie comprend une partie commande et un capteur de température, et sachant que
le capteur de température est configuré pour mesurer une température de la batterie, et la partie expansion comprend la partie réception de signal et la partie bobine ;
la partie commande du système d'échange de chaleur de batterie est configurée pour émettre un signal vers la partie réception de signal sur la base d'informations acquises par le capteur de température ;
la partie réception de signal est configurée pour recevoir le signal émis par la partie commande du système d'échange de chaleur de batterie, et émettre un signal de consigne vers la partie bobine ; et
la partie noyau de la partie expansion est entraînée par la partie bobine, de telle sorte que le pointeau de soupape soit mobile dans la direction axiale de la partie noyau par rapport à la partie paroi formant l'orifice de la partie noyau, et le pointeau de soupape est apte à être espacé de la partie paroi formant l'orifice de la partie noyau ou le pointeau de soupape s'étend dans l'orifice.
